(19) **Europäisches Patentamt** / **European Patent Office** / **Office européen des brevets**

(11) **EP 4 538 977 A1**

(12) **EUROPEAN PATENT APPLICATION**
published in accordance with Art. 153(4) EPC

(43) Date of publication:
**16.04.2025 Bulletin 2025/16**

(21) Application number: **23819847.7**

(22) Date of filing: **06.06.2023**

(51) International Patent Classification (IPC):
*G06T 9/00* *(2006.01)*

(52) Cooperative Patent Classification (CPC):
**G06T 9/00**

(86) International application number:
**PCT/JP2023/021028**

(87) International publication number:
**WO 2023/238867 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.06.2022 US 202263349243 P**
**09.05.2023 US 202363465033 P**

(71) Applicant: **Panasonic Intellectual Property Corporation**
**of America**
**Torrance, CA 90504 (US)**

(72) Inventors:
- **SUGIO, Toshiyasu**
  **Osaka 571-0057 (JP)**
- **IGUCHI, Noritaka**
  **Osaka 571-0057 (JP)**

- **NISHI, Takahiro**
  **Osaka 571-0057 (JP)**
- **LIM, Chong Soon**
  **Singapore 469332 (SG)**
- **WU, Zheng**
  **Singapore 469332 (SG)**
- **TEO, Han Boon**
  **Singapore 469332 (SG)**
- **LOI, Keng Liang**
  **Singapore 469332 (SG)**
- **HAN, Chung Dean**
  **Singapore 469332 (SG)**
- **NADER, Georges**
  **Singapore 469332 (SG)**
- **DUMANOV, Farman**
  **Singapore 469332 (SG)**

(74) Representative: **Grünecker Patent- und Rechtsanwälte**
**PartG mbB**
**Leopoldstraße 4**
**80802 München (DE)**

(54) **ENCODING DEVICE, DECODING DEVICE, ENCODING METHOD, AND DECODING METHOD**

(57)     An encoding device (100) includes: memory (152); and a circuit (151). In operation, the circuit (151): when a first triangle satisfies a condition, selects a mode for encoding a current vertex to be encoded of a second triangle from among a first set of modes including a normal mode that uses the first triangle to encode the current vertex; when the first triangle does not satisfy the condition, selects the mode from among a second set of modes including an exception mode that uses a third triangle different from the first triangle and the second triangle to encode the current vertex; and encodes the current vertex according to the mode selected.

FIG. 62

EP 4 538 977 A1

# Description

[Technical Field]

The present disclosure relates to, for example, an encoding device.

[Background Art]

PTL 1 proposes a method and a device for encoding and decoding three-dimensional mesh data.

[Citation List]

[Patent Literature]

[PTL 1] Japanese Unexamined Patent Application Publication No. 2006-187015

[Summary of Invention]

[Technical Problem]

There are demands for further improvement in processing of encoding three-dimensional data and the like. An object of the present disclosure is to improve processing of encoding three-dimensional data and the like.

[Solution to Problem]

An encoding device according to one aspect of the present disclosure includes: memory; and a circuit accessible to the memory, in which, in operation, the circuit: when a first triangle satisfies a condition, selects a mode for encoding a current vertex to be encoded of a second triangle from among a first set of modes including a normal mode that uses the first triangle to encode the current vertex; when the first triangle does not satisfy the condition, selects the mode from among a second set of modes including an exception mode that uses a third triangle different from the first triangle and the second triangle to encode the current vertex; and encodes the current vertex according to the mode selected.

[Advantageous Effects of Invention]

The present disclosure can contribute toward improving processing of encoding three-dimensional data and the like.

[Brief Description of Drawings]

[FIG. 1]

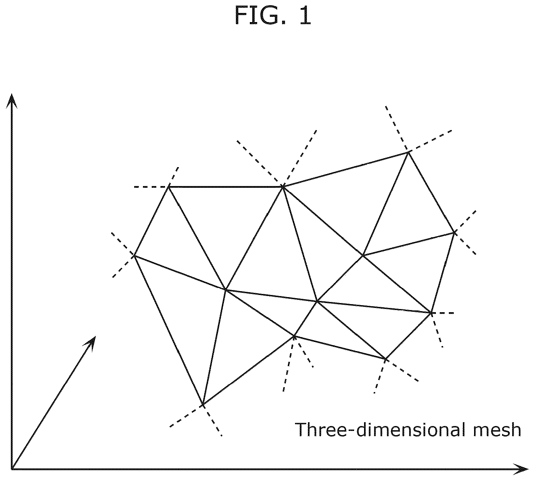

FIG. 1 is a conceptual diagram illustrating a three-dimensional mesh according to an embodiment.

[FIG. 2]

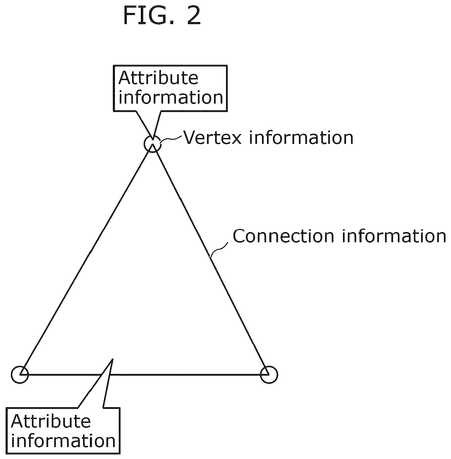

FIG. 2 is a conceptual diagram illustrating basic elements of the three-dimensional mesh according to the embodiment.
[FIG. 3]

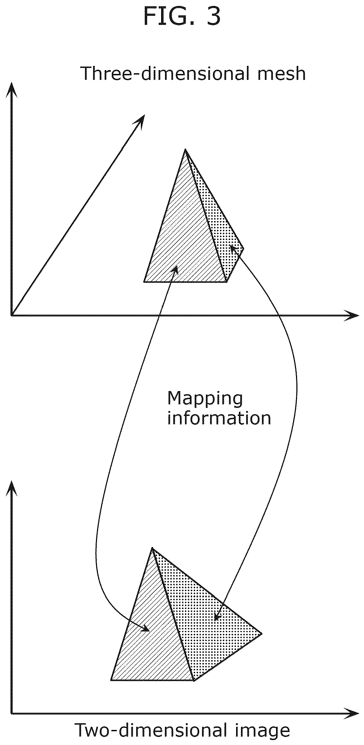

FIG. 3 is a conceptual diagram illustrating mapping according to the embodiment.
[FIG. 4]

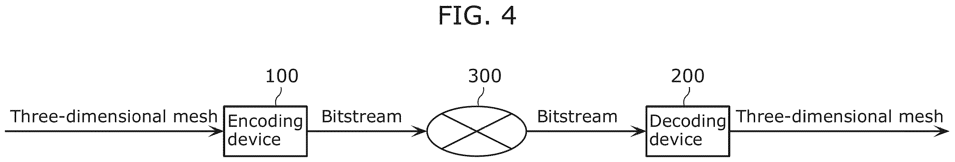

FIG. 4 is a block diagram illustrating a configuration example of an encoding/decoding system according to the embodiment.
[FIG. 5]

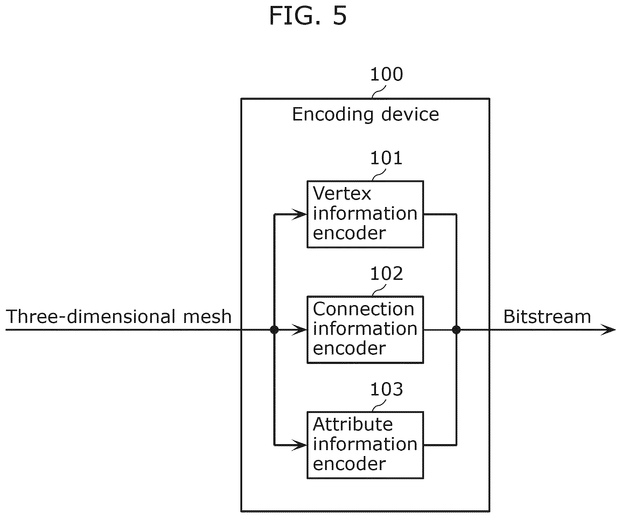

FIG. 5 is a block diagram illustrating a configuration example of an encoding device according to the embodiment.
[FIG. 6]

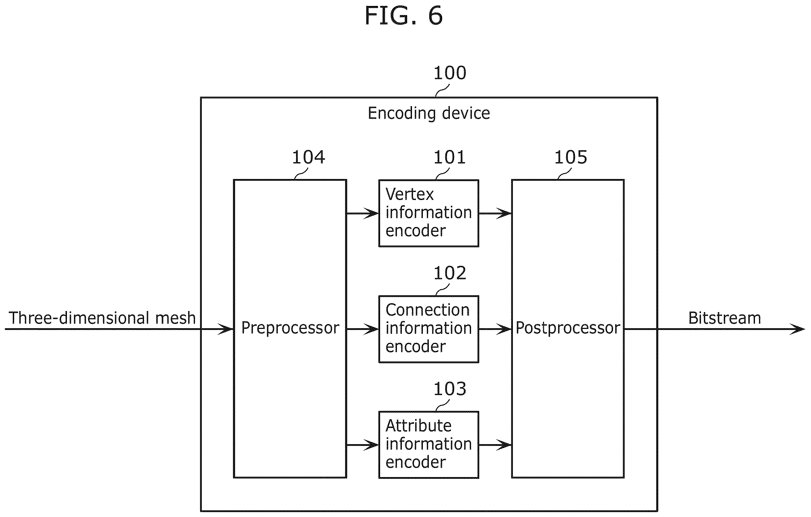

FIG. 6 is a block diagram illustrating another configuration example of the encoding device according to the embodiment.
[FIG. 7]

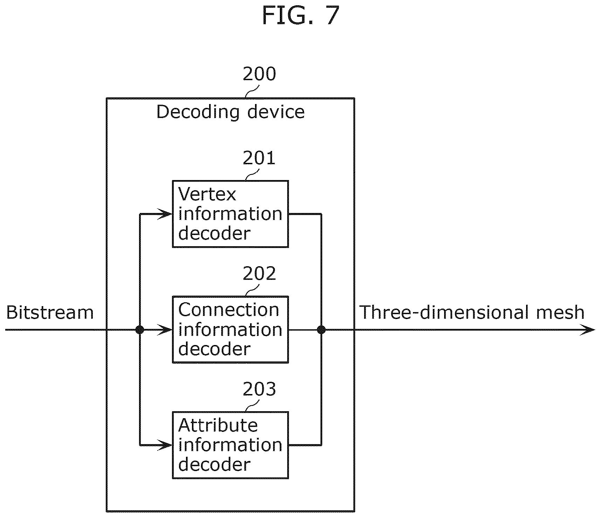

FIG. 7 is a block diagram illustrating a configuration example of a decoding device according to the embodiment.
[FIG. 8]

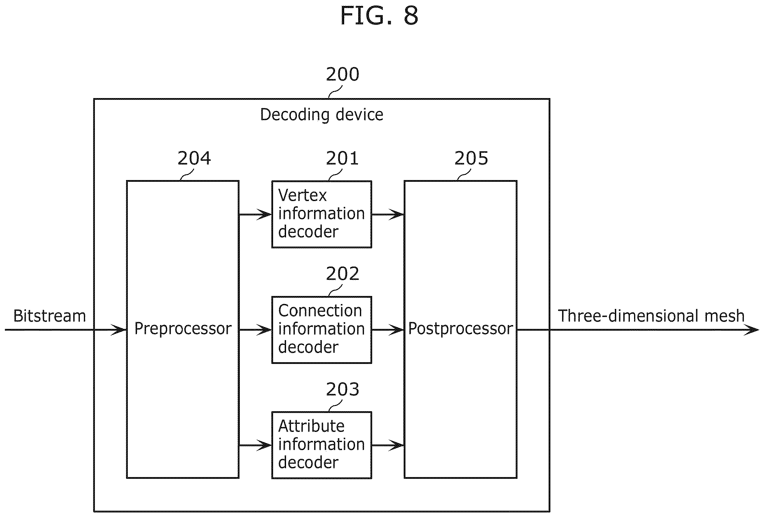

FIG. 8 is a block diagram illustrating another configuration example of the decoding device according to the embodiment.
[FIG. 9]

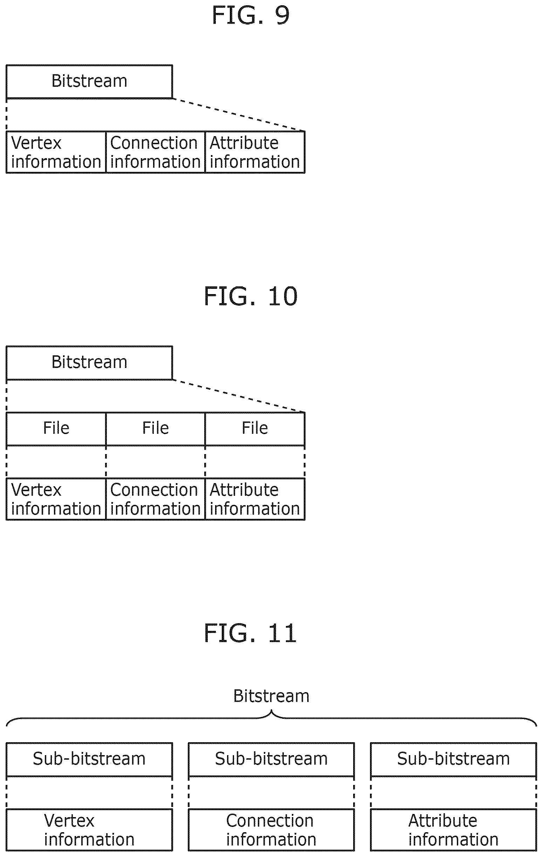

FIG. 9 is a conceptual diagram illustrating a configuration example of a bitstream according to the embodiment.
[FIG. 10]
FIG. 10 is a conceptual diagram illustrating another configuration example of the bitstream according to the embodiment.
[FIG. 11]
FIG. 11 is a conceptual diagram illustrating yet another configuration example of the bitstream according to the embodiment.
[FIG. 12]

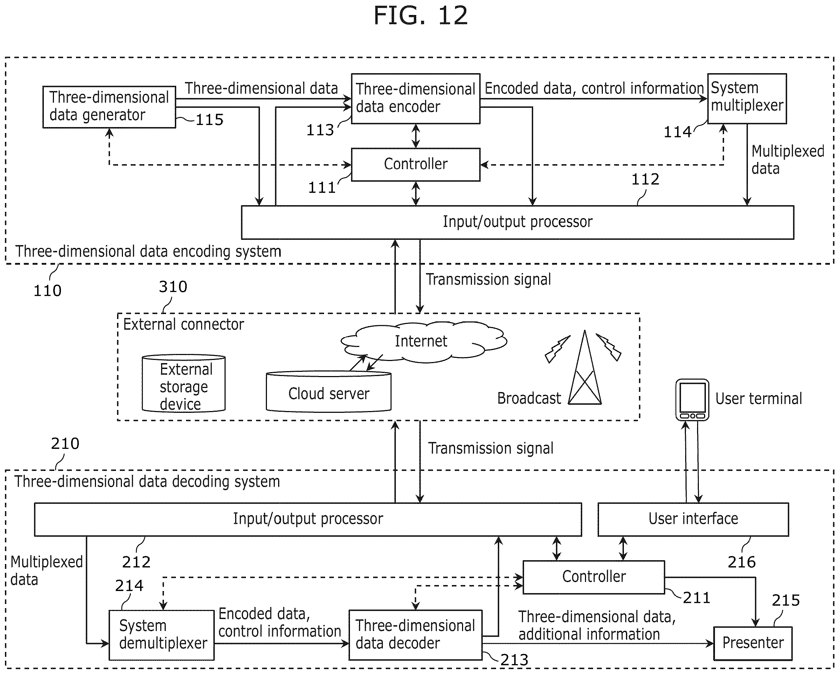

FIG. 12 is a block diagram illustrating a specific example of the encoding/decoding system according to the embodiment.
[FIG. 13]

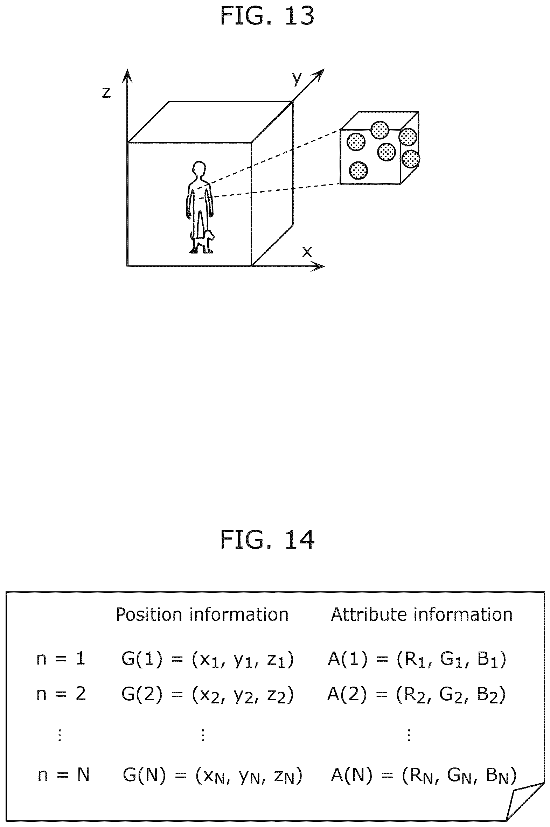

FIG. 13 is a conceptual diagram illustrating a configuration example of point cloud data according to the embodiment.
[FIG. 14]
FIG. 14 is a conceptual diagram illustrating a data file example of the point cloud data according to the embodiment.
[FIG. 15]

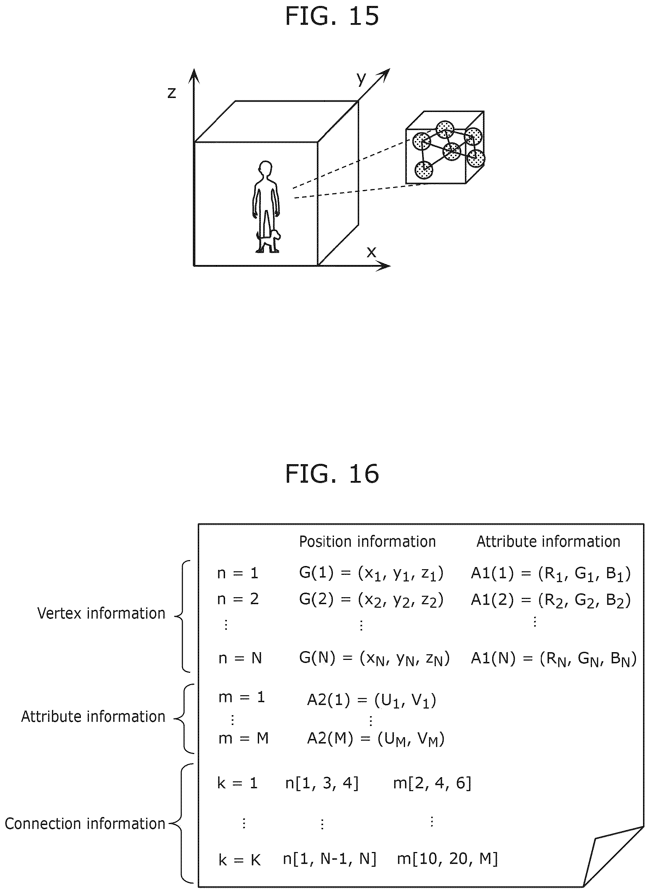

FIG. 15 is a conceptual diagram illustrating a configuration example of mesh data according to the embodiment.
[FIG. 16]
FIG. 16 is a conceptual diagram illustrating a data file example of the mesh data according to the embodiment.
[FIG. 17]

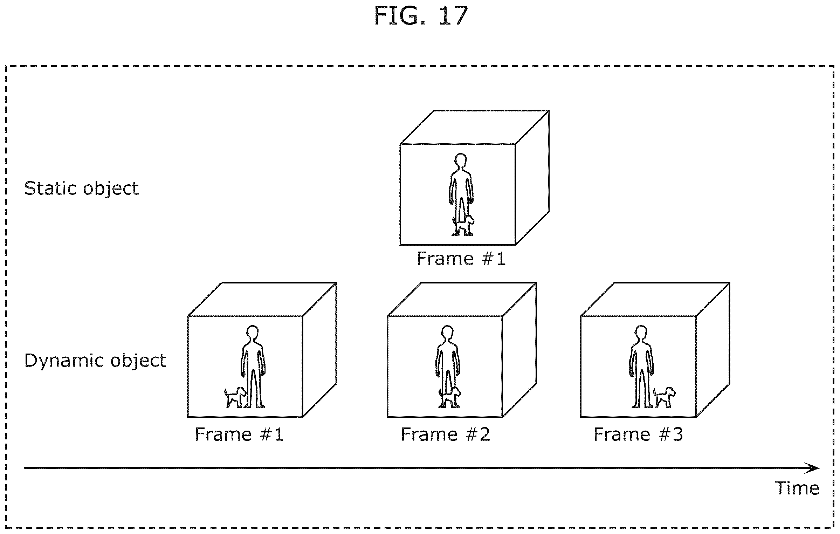

FIG. 17 is a conceptual diagram illustrating a type of three-dimensional data according to the embodiment.
[FIG. 18]

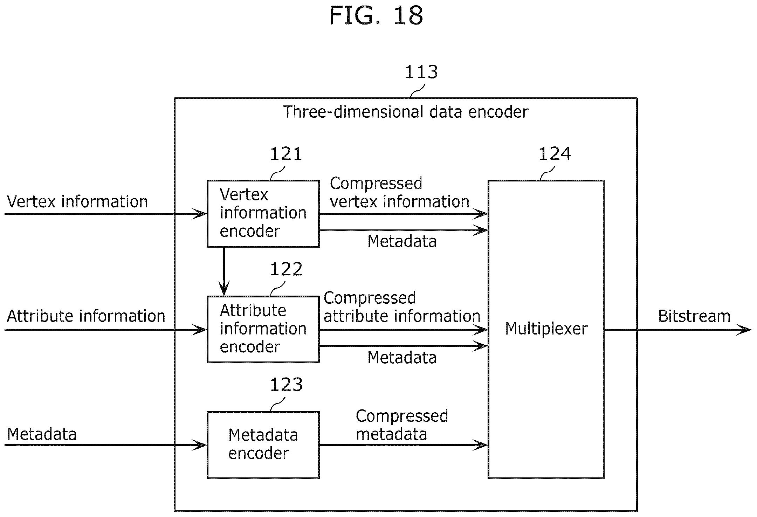

FIG. 18 is a block diagram illustrating a configuration example of a three-dimensional data encoder according to the embodiment.
[FIG. 19]

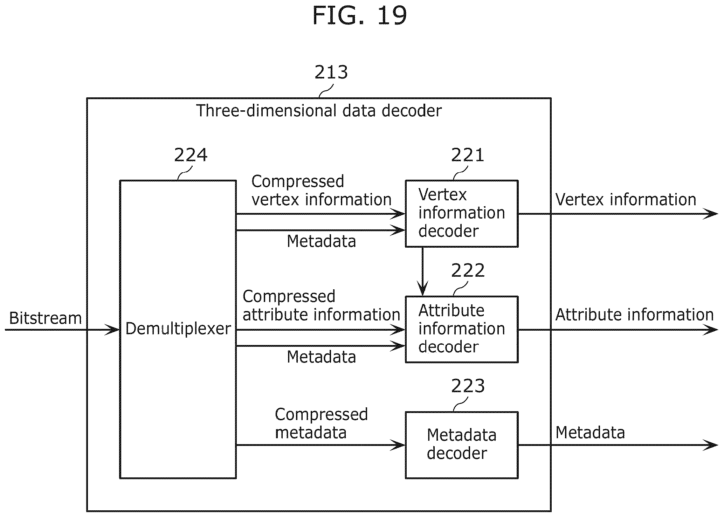

FIG. 19 is a block diagram illustrating a configuration example of a three-dimensional data decoder according to the embodiment.
[FIG. 20]

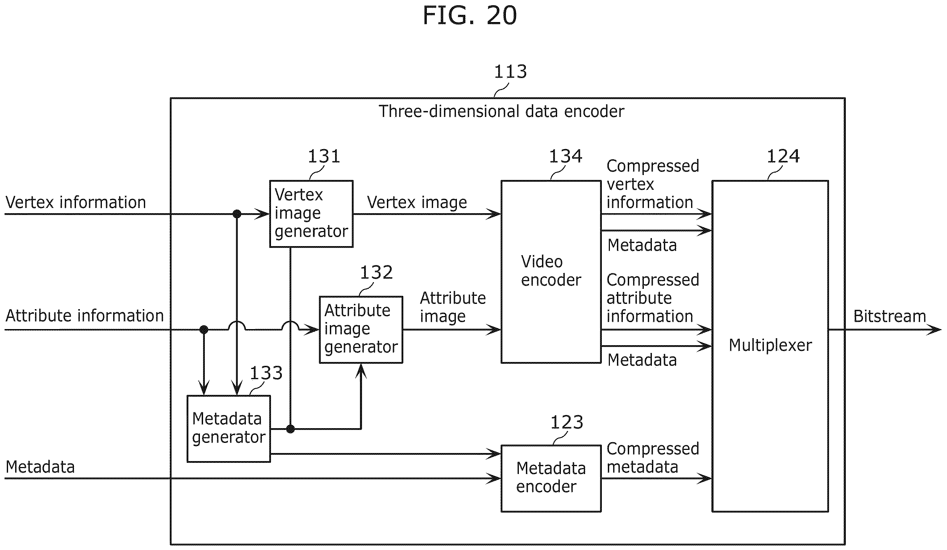

FIG. 20 is a block diagram illustrating another configuration example of the three-dimensional data encoder according to the embodiment.
[FIG. 21]

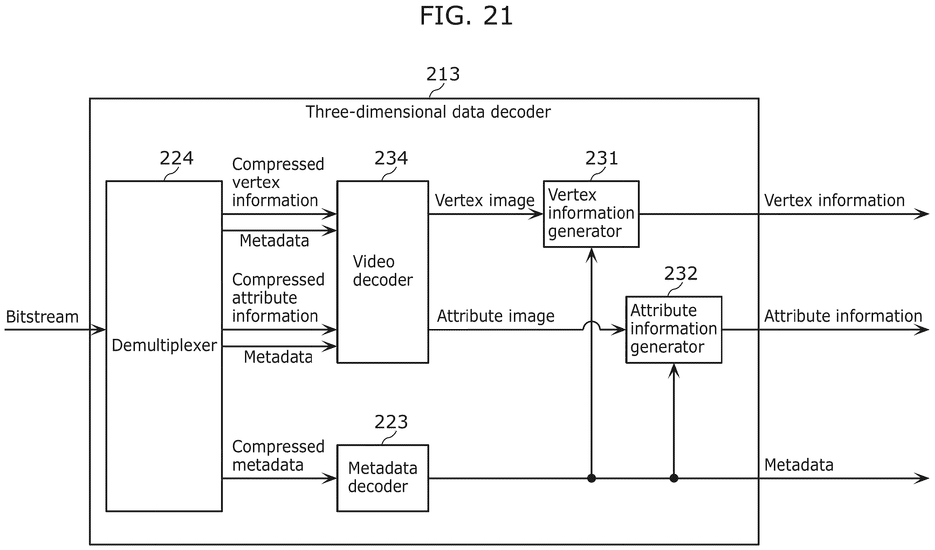

FIG. 21 is a block diagram illustrating another configuration example of the three-dimensional data decoder according to the embodiment.
[FIG. 22]

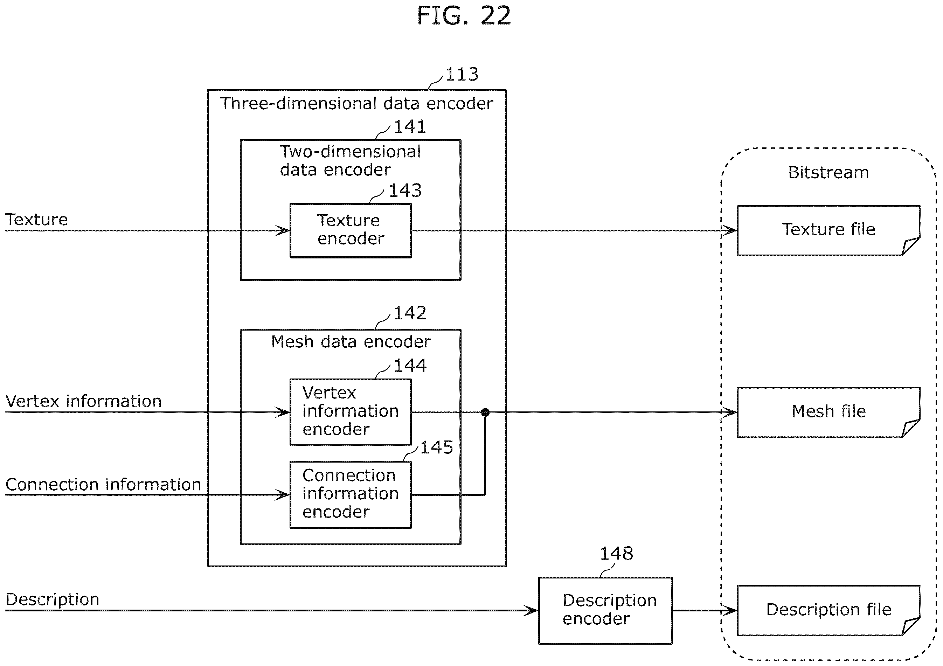

FIG. 22 is a conceptual diagram illustrating a specific example of encoding processing according to the embodiment.
[FIG. 23]

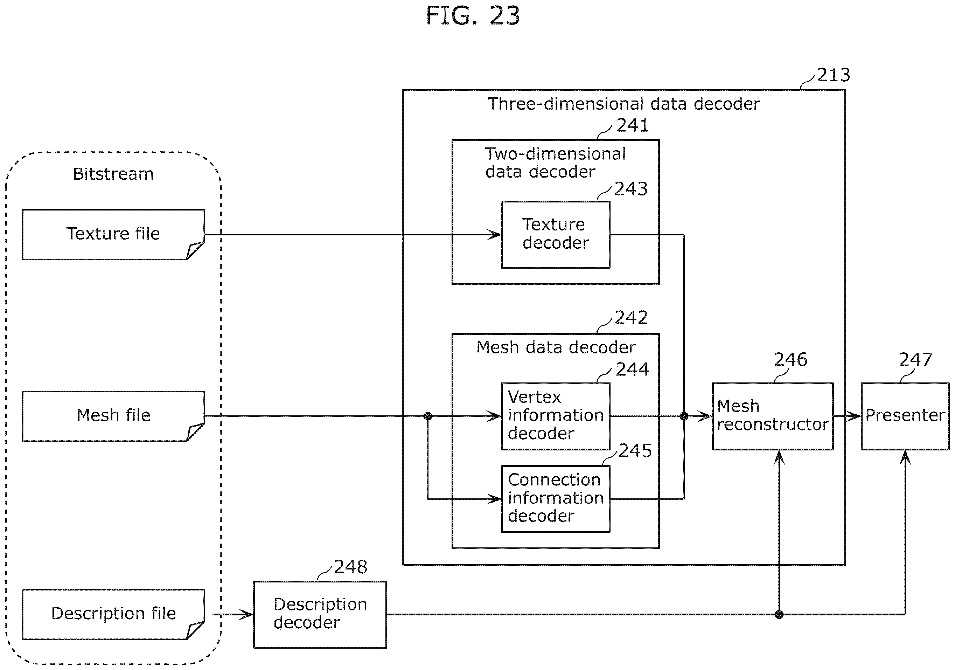

FIG. 23 is a conceptual diagram illustrating a specific example of decoding processing according to the embodiment.
[FIG. 24]

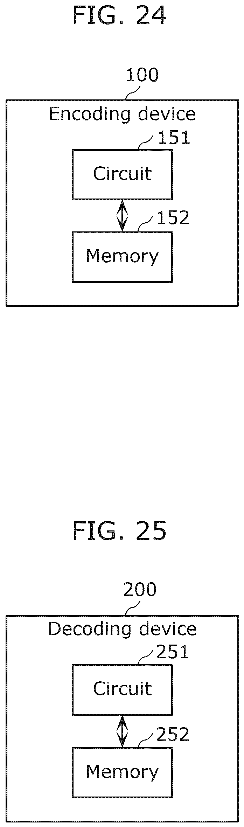

FIG. 24 is a block diagram illustrating an implementation example of the encoding device according to the embodiment.
[FIG. 25]
FIG. 25 is a block diagram illustrating an implementation example of the decoding device according to the embodiment.
[FIG. 26]

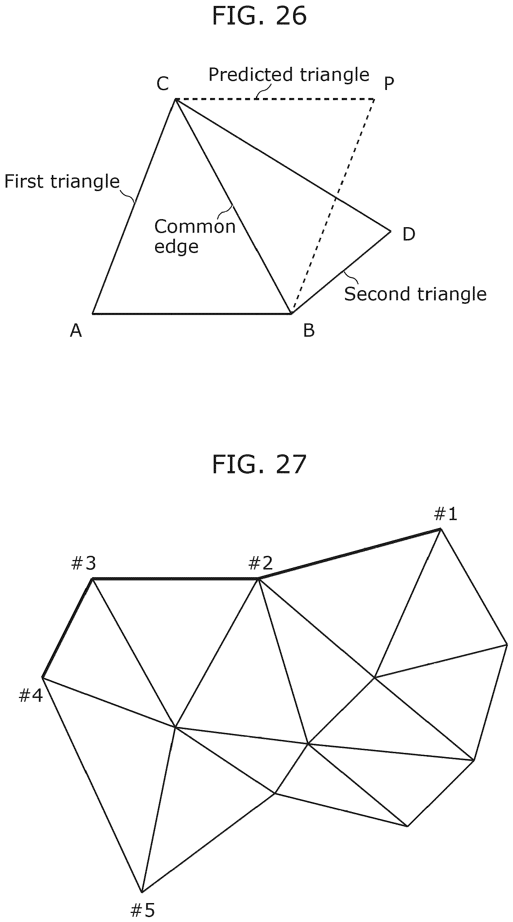

FIG. 26 is a conceptual diagram illustrating a parallelogram prediction system according to a reference example.
[FIG. 27]
FIG. 27 is a conceptual diagram illustrating a polynomial prediction system according to a reference example.
[FIG. 28]

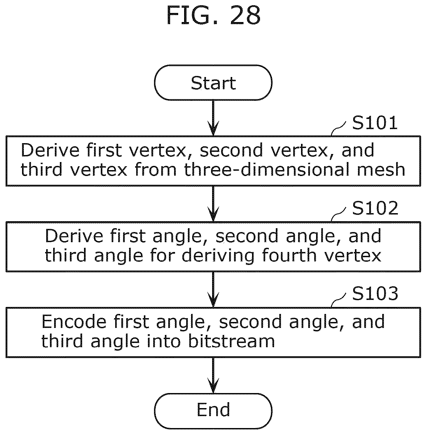

FIG. 28 is a flow chart illustrating an example of encoding processing according to a first aspect.
[FIG. 29]

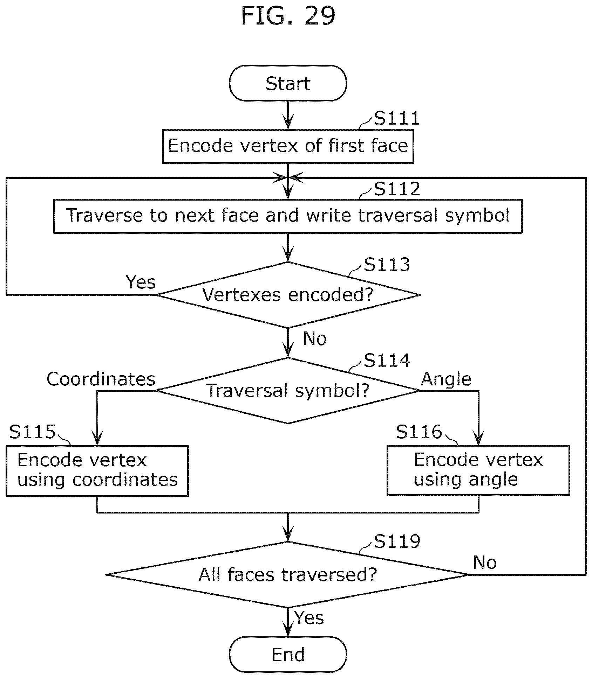

FIG. 29 is a flow chart illustrating a specific example of the encoding processing according to the first aspect.
[FIG. 30]

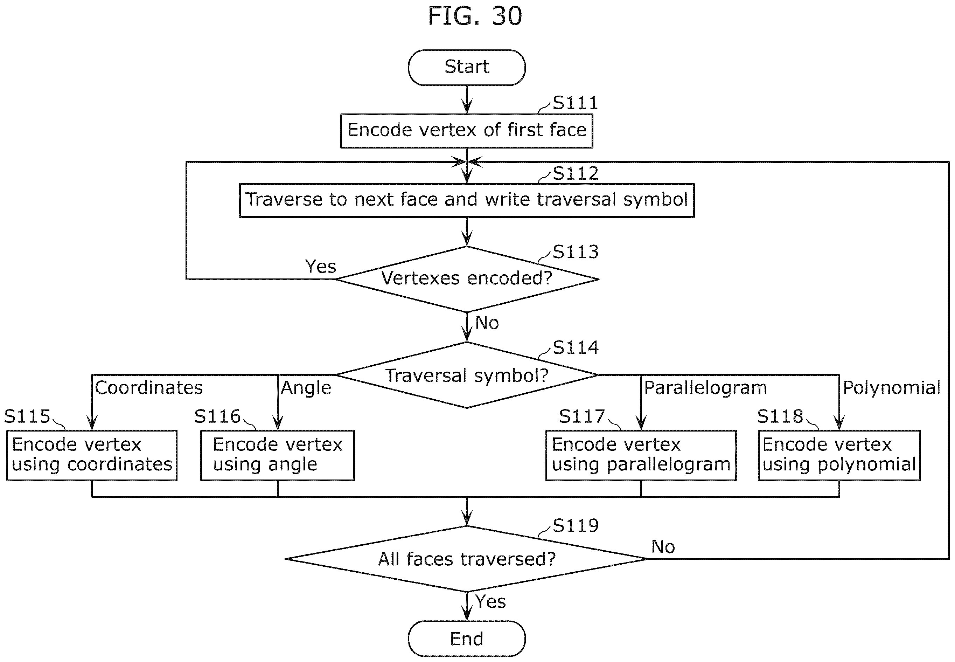

FIG. 30 is a flow chart illustrating another specific example of the encoding processing according to the first aspect.
[FIG. 31]

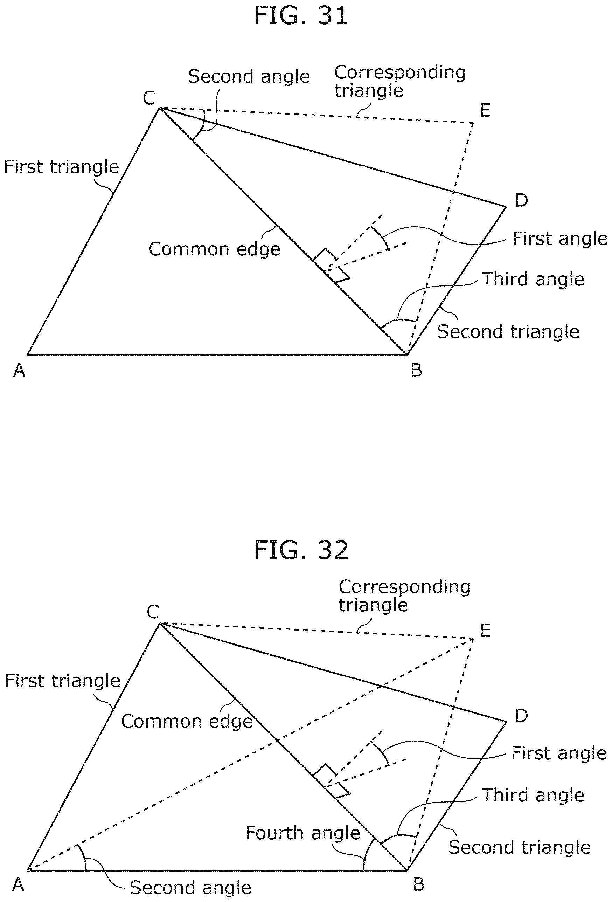

FIG. 31 is a conceptual diagram illustrating an example of three angles according to the first aspect.
[FIG. 32]
FIG. 32 is a conceptual diagram illustrating another example of three angles according to the first aspect.
[FIG. 33]

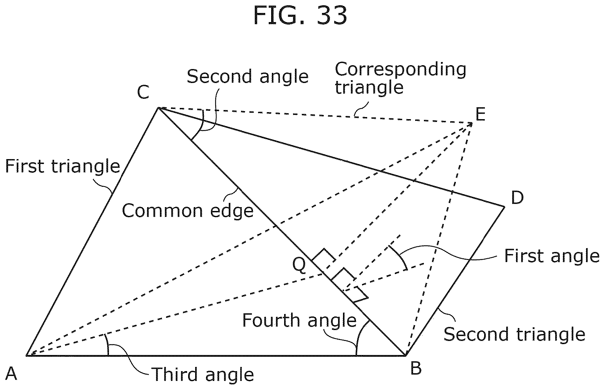

FIG. 33 is a conceptual diagram illustrating yet another example of three angles according to the first aspect.
[FIG. 34]

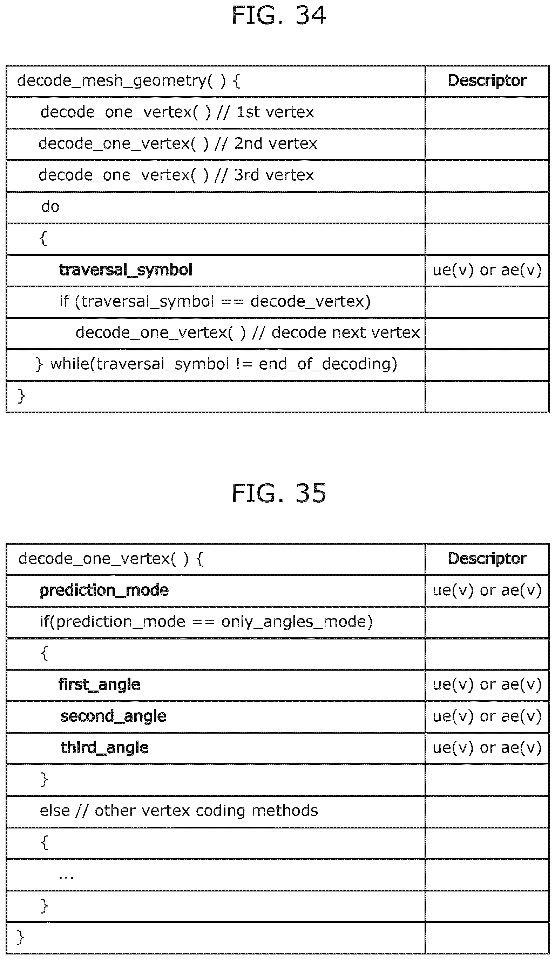

FIG. 34 is a syntax diagram illustrating a syntax structure example of vertex information with respect to a plurality of vertexes according to the first aspect.
[FIG. 35]
FIG. 35 is a syntax diagram illustrating a syntax structure example of vertex information with respect to one vertex according to the first aspect.
[FIG. 36]

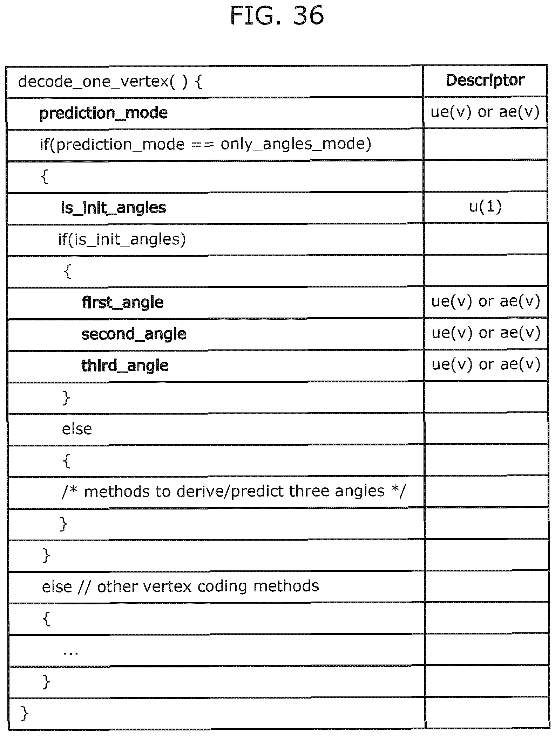

FIG. 36 is a syntax diagram illustrating another syntax structure example of vertex information with respect to one vertex according to the first aspect.
[FIG. 37]

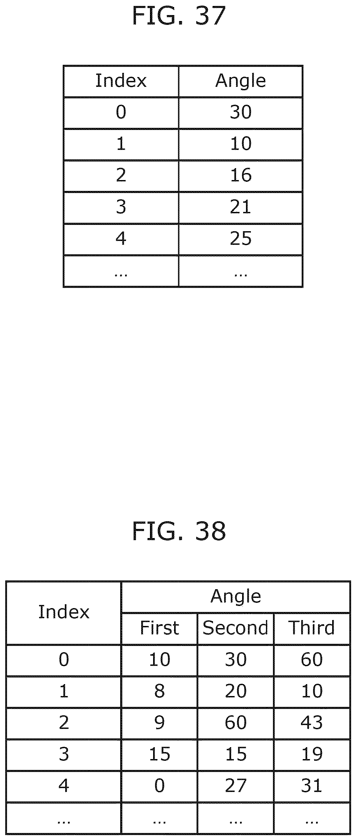

FIG. 37 is a table diagram illustrating an example of a table used in prediction of an angle.
[FIG. 38]
FIG. 38 is a table diagram illustrating another example of a table used in prediction of an angle.
[FIG. 39]

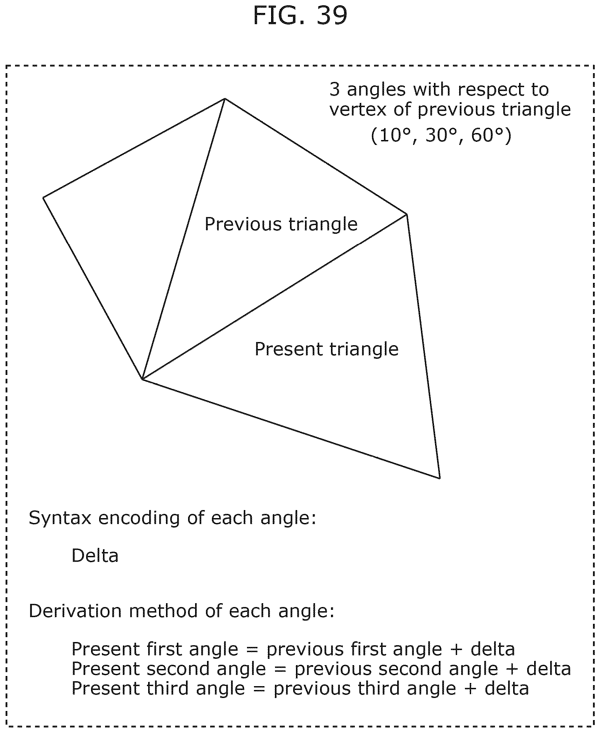

FIG. 39 is a conceptual diagram illustrating an example of prediction using an angle with respect to a vertex of a previous triangle.
[FIG. 40]

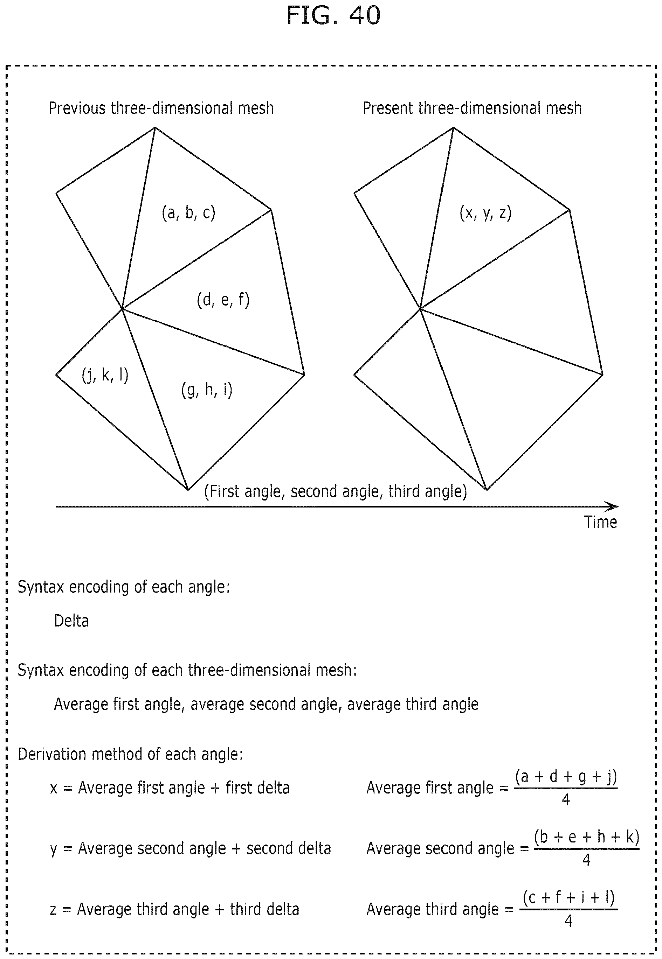

FIG. 40 is a conceptual diagram illustrating an example of prediction using an angle with respect to a vertex of a previous three-dimensional mesh.
[FIG. 41]

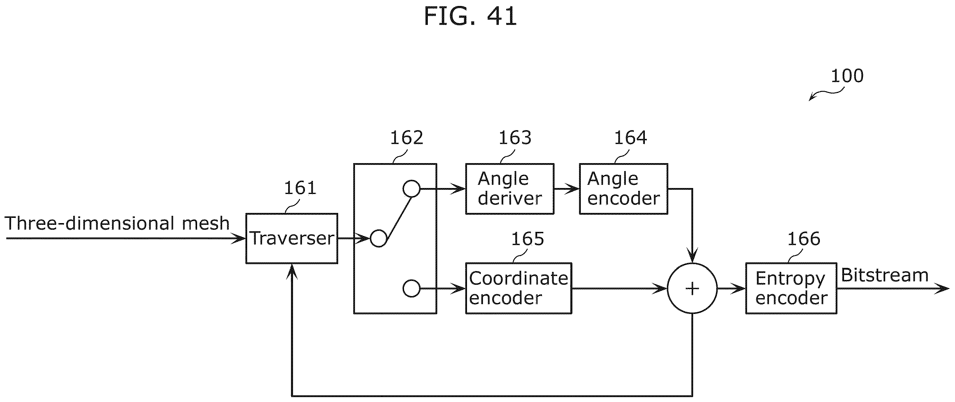

FIG. 41 is a block diagram illustrating a configuration example of an encoding device according to the first aspect.
[FIG. 42]

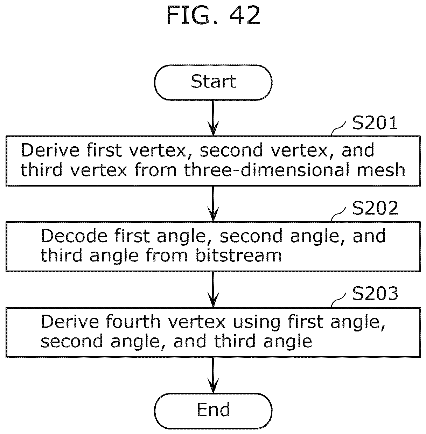

FIG. 42 is a flow chart illustrating an example of decoding processing according to the first aspect.
[FIG. 43]

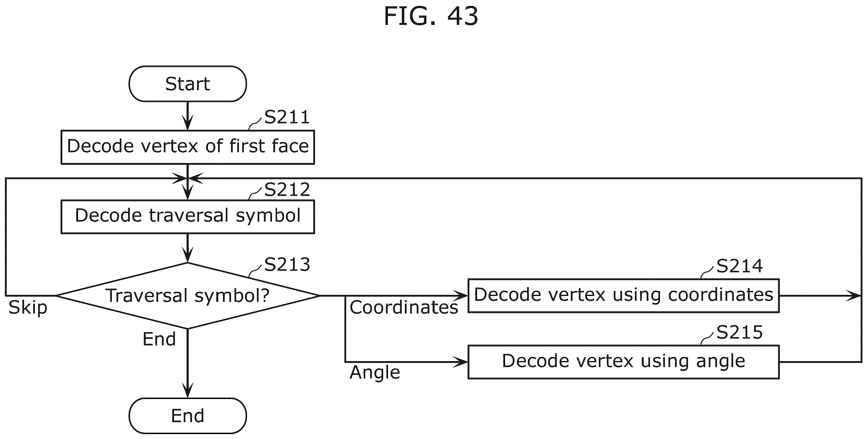

FIG. 43 is a flow chart illustrating a specific example of the decoding processing according to the first aspect.
[FIG. 44]

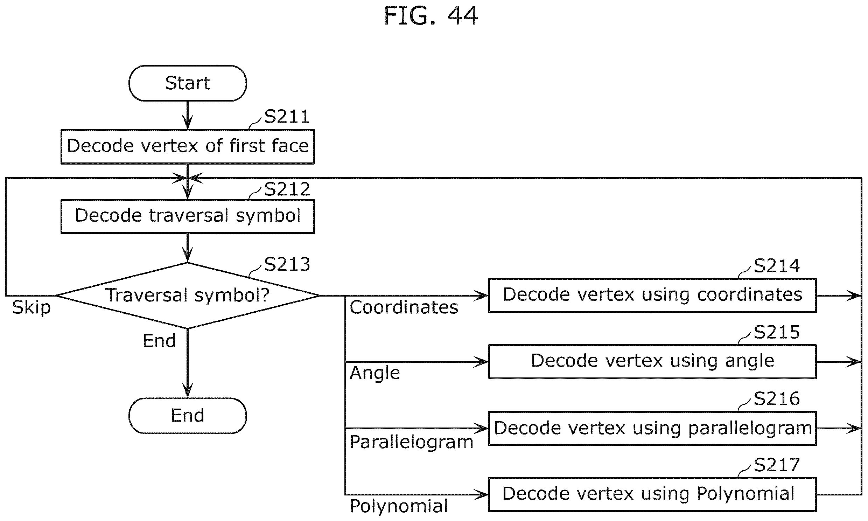

FIG. 44 is a flow chart illustrating another specific example of the decoding processing according to the first aspect.
[FIG. 45]

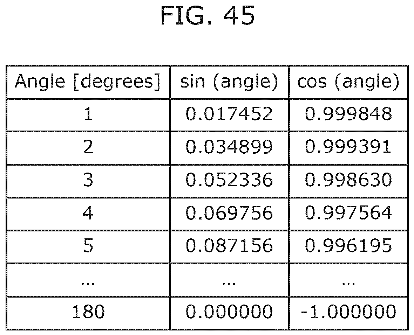

FIG. 45 is a table diagram illustrating an example of a look-up table of a sine function and a cosine function.
[FIG. 46]

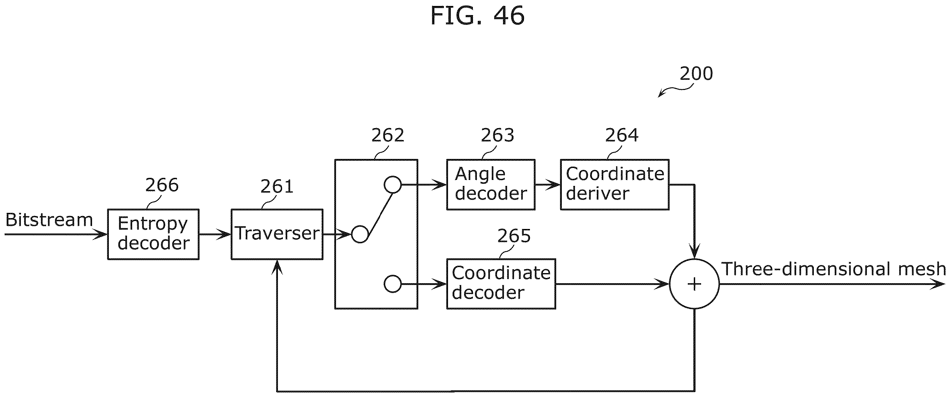

FIG. 46 is a block diagram illustrating a configuration example of a decoding device according to the first aspect.
[FIG. 47]

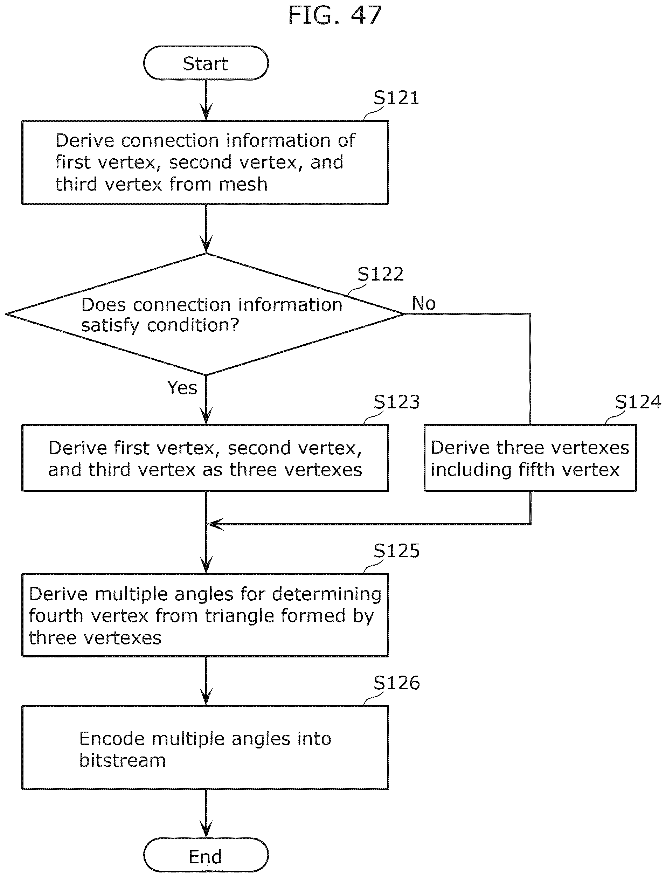

FIG. 47 is a flowchart illustrating an example of encoding processing according to a second aspect.
[FIG. 48]

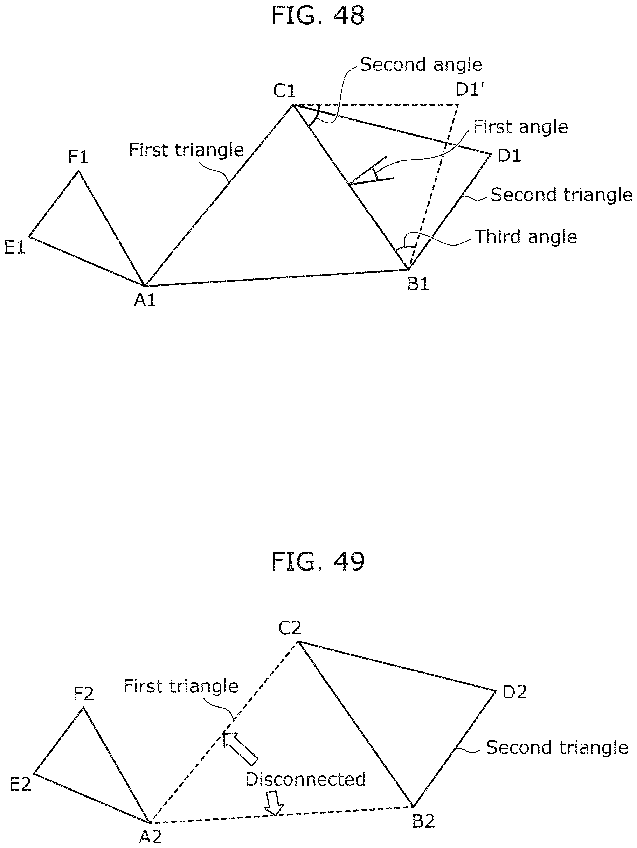

FIG. 48 is a conceptual diagram illustrating an example of a mesh according to the second aspect.
[FIG. 49]
FIG. 49 is a conceptual diagram illustrating an example of a segmented mesh.
[FIG. 50]

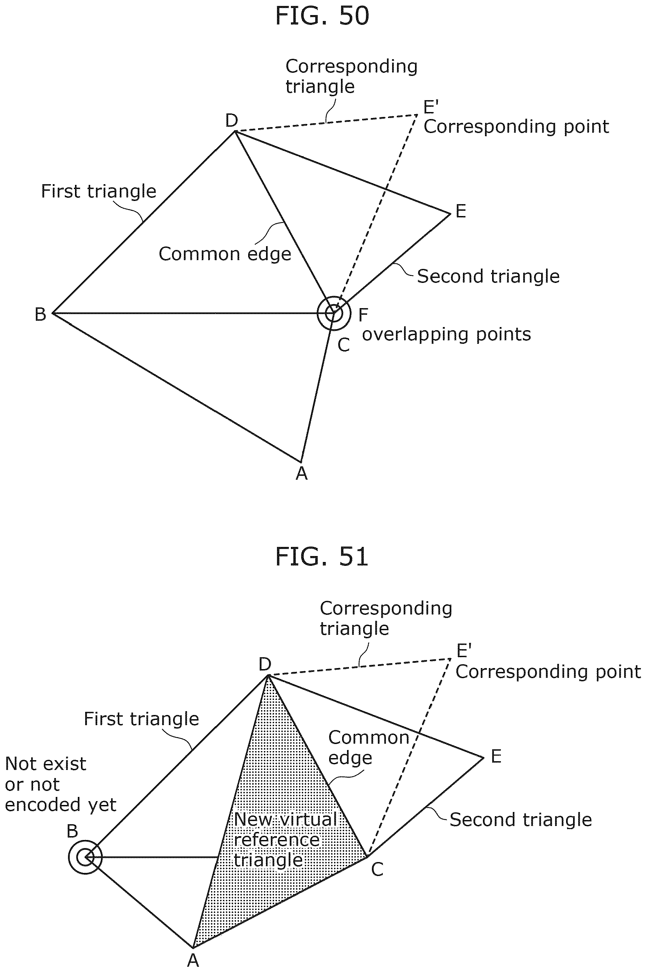

FIG. 50 is a conceptual diagram illustrating an example of a mesh in which vertexes overlap with each other.
[FIG. 51]
FIG. 51 is a conceptual diagram illustrating an example of exception processing using a set of vertexes previously encoded.
[FIG. 52]

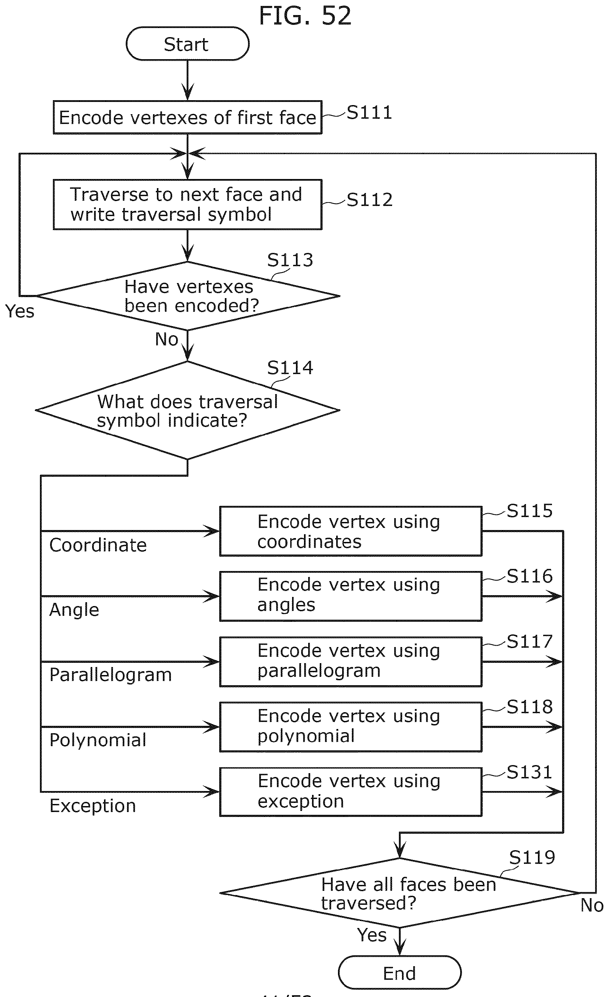

FIG. 52 is a flowchart illustrating a specific example of the encoding processing according to the second aspect.
[FIG. 53]

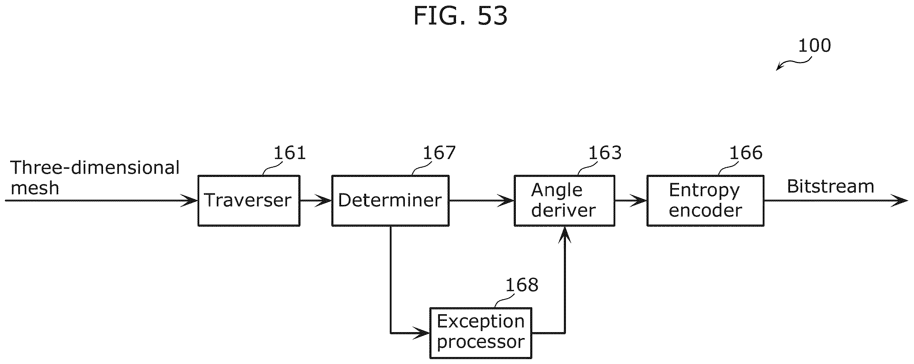

FIG. 53 is a block diagram illustrating a configuration example of an encoding device according to the second aspect.
[FIG. 54]

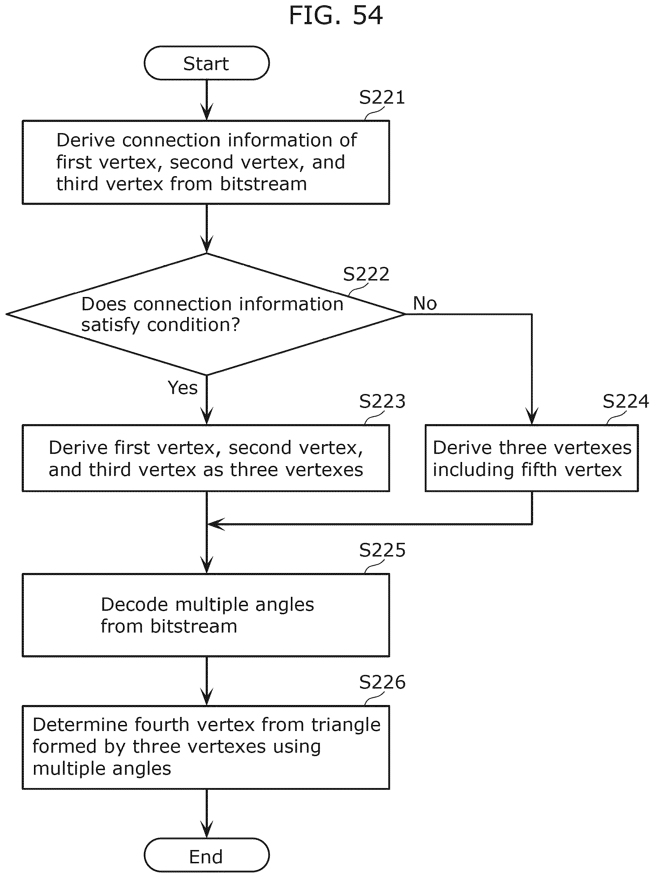

FIG. 54 is a flow chart illustrating an example of decoding processing according to the second aspect.
[FIG. 55]

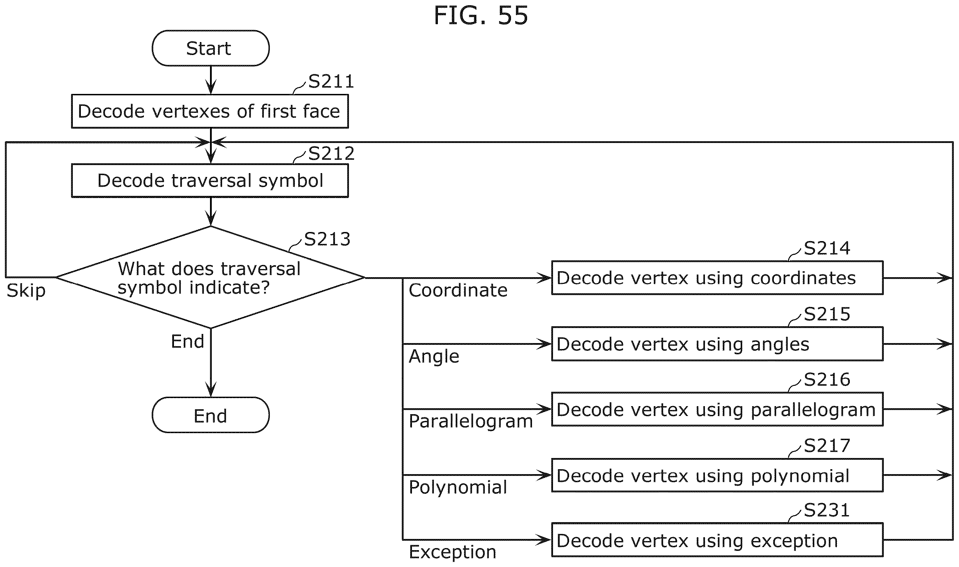

FIG. 55 is a flow chart illustrating a specific example of the decoding processing according to the second aspect.
[FIG. 56]

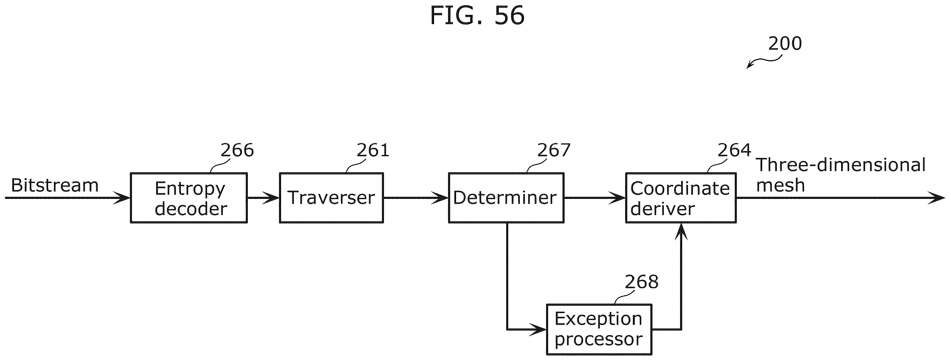

FIG. 56 is a block diagram illustrating a configuration example of a decoding device according to the second aspect.
[FIG. 57]

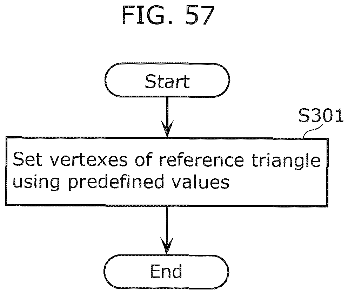

FIG. 57 is a flowchart illustrating an example of exception processing according to the second aspect.
[FIG. 58]

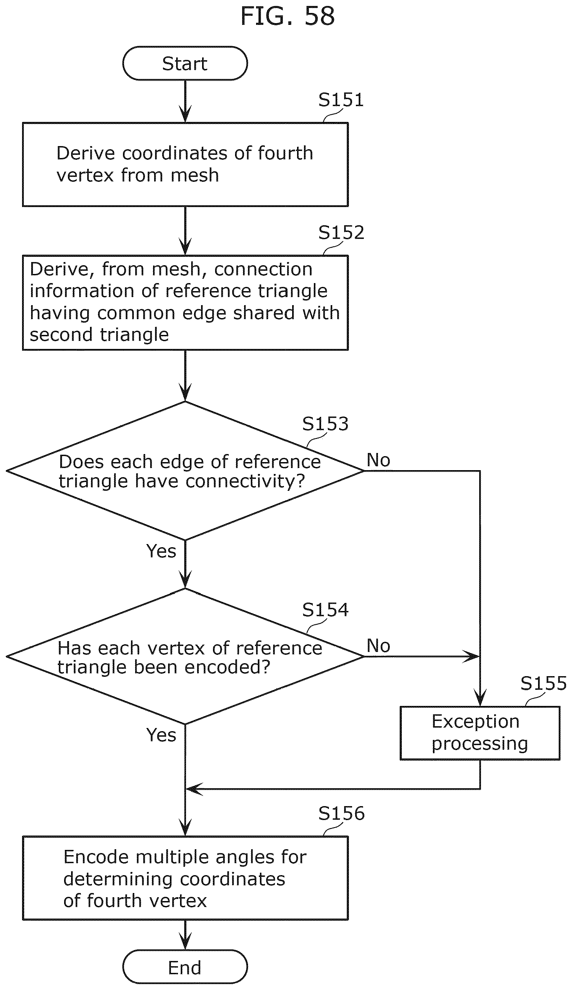

FIG. 58 is a flowchart illustrating another example of the encoding processing according to the second aspect.
[FIG. 59]

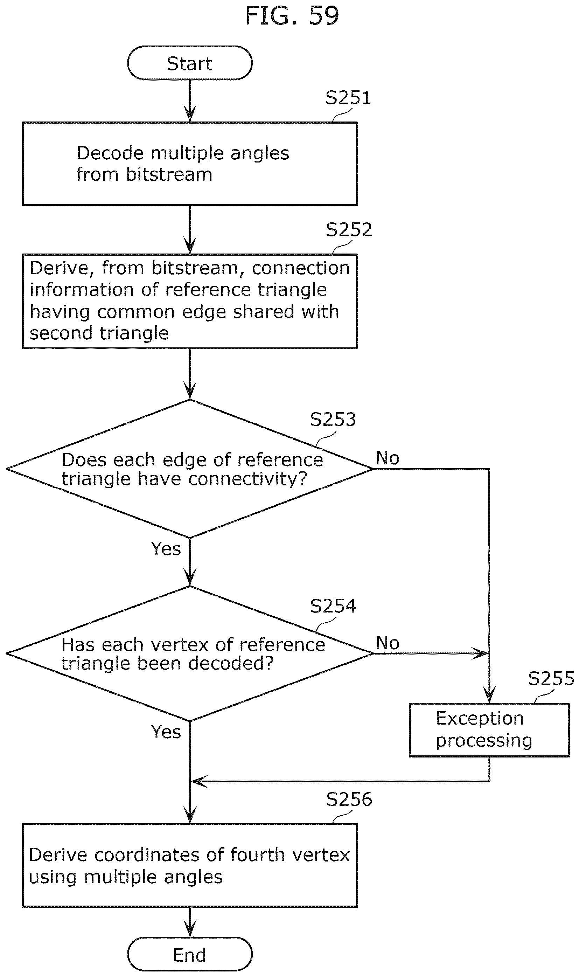

FIG. 59 is a flowchart illustrating another example of the decoding processing according to the second aspect.
[FIG. 60]

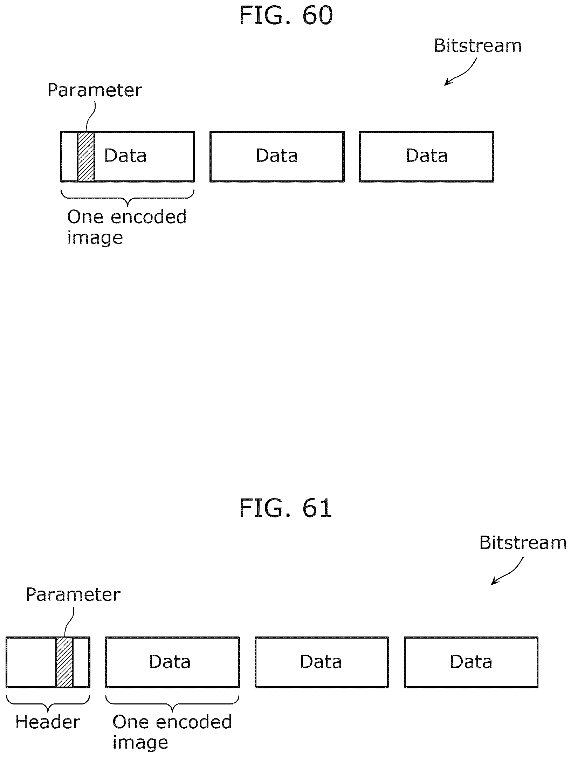

FIG. 60 is a conceptual diagram illustrating an example of the position of a parameter in a bitstream.
[FIG. 61]
FIG. 61 is a conceptual diagram illustrating another example of the position of a parameter in a bitstream.
[FIG. 62]

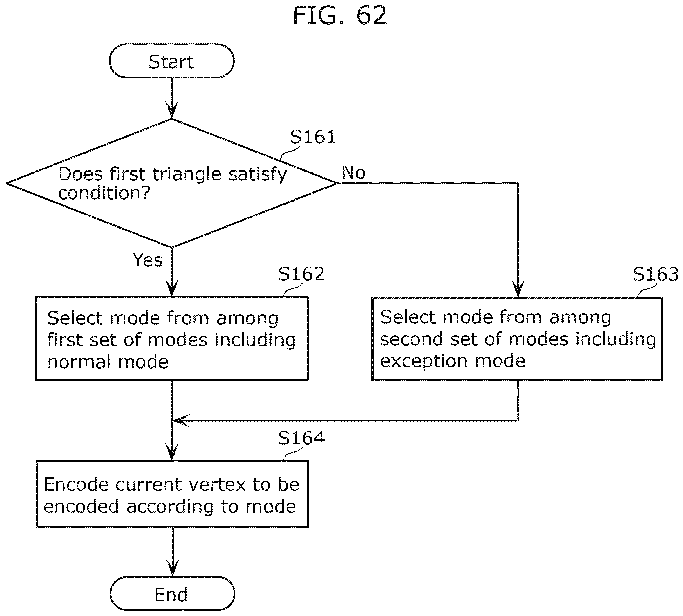

FIG. 62 is a flowchart illustrating an example of basic encoding processing according to the embodiment.
[FIG. 63]

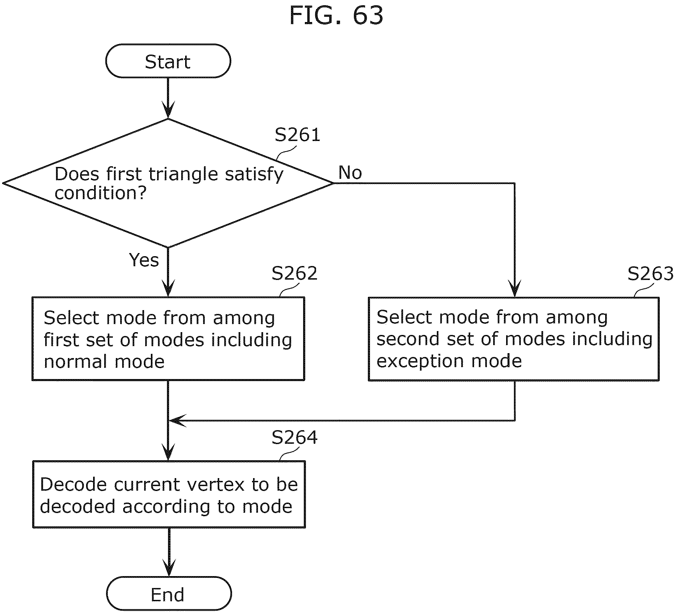

FIG. 63 is a flowchart illustrating an example of basic decoding processing according to the embodiment.
[FIG. 64]

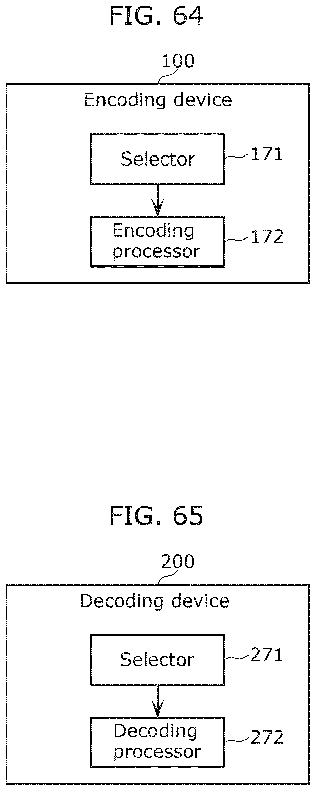

FIG. 64 is a block diagram illustrating another configuration example of the encoding device according to the embodiment.
[FIG. 65]
FIG. 65 is a block diagram illustrating another configuration example of the decoding device according to the embodiment.

[Description of Embodiments]

<Introduction>

For example, a three-dimensional mesh is used in computer graphic images. A three-dimensional mesh is constituted of vertex information indicating a position of each of a plurality of vertexes in a three-dimensional space, connection information indicating a connection relationship among the plurality of vertexes, and attribute information indicating an attribute of each vertex or each face. Each face is constructed according to the connection relationship among a plurality of vertexes. Various computer graphic images can be expressed by such three-dimensional meshes.

In addition, efficient encoding and decoding of three-dimensional meshes are anticipated for the purpose of transmission and accumulation of the three-dimensional meshes. For example, in order to encode vertex information in an efficient manner, an encoding device reduces a coding amount by predicting position information of a vertex being an encoding object using position information of an encoded vertex and encoding a difference with respect to the prediction. More specifically, for example, the encoding device encodes the vertexes of the second triangle adjacent to the first triangle by referring to the first triangle as a reference triangle, thereby reducing the code amount.

However, the first triangle may be unsuitable as a reference triangle. Specifically, there is a possibility that a vertex of the first triangle has not been encoded or an edge of the first triangle has no connectivity. If the vertexes of the second triangle are encoded by referring to such a first triangle, there is a possibility that it is difficult to decode the vertexes of the second triangle or the code amount is not reduced.

In view of this, an encoding device of Example 1 includes: memory; and a circuit accessible to the memory, in which, in operation, the circuit: when a first triangle satisfies a condition, selects a mode for encoding a current vertex to be encoded of a second triangle from among a first set of modes including a normal mode that uses the first triangle to encode the current vertex; when the first triangle does not satisfy the condition, selects the mode from among a second set of modes including an exception mode that uses a third triangle different from the first triangle and the second triangle to encode the current vertex; and encodes the current vertex according to the mode selected.

According to this, when the first triangle does not satisfy the condition, it may be possible to use the third triangle different from the first triangle to encode the vertexes of the second triangle. Therefore, it may be possible to encode the vertexes of the second triangle by using a reference triangle suitable for the encoding.

Moreover, an encoding device of Example 2 may be the encoding device of Example 1, in which the third triangle shares an edge with the first triangle.

According to this, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Moreover, an encoding device of Example 3 may be the encoding device of Example 1 or 2, in which the third triangle shares an edge with the second triangle.

According to this, it may be possible to use a third triangle near the second triangle in the exception mode. Therefore, it may be possible to efficiently encode the current vertex to be encoded by using a third triangle near the current vertex to be encoded.

Moreover, an encoding device of Example 4 may be the encoding device of any of Examples 1 to 3, in which the third triangle shares a vertex with the first triangle.

According to this, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Moreover, an encoding device of Example 5 may be the encoding device of any of Examples 1 to 4, in which each vertex of the third triangle has been encoded.

According to this, it may be possible to use a third triangle that reflects a characteristic of a three-dimensional mesh to encode the current vertex to be encoded. Therefore, it may be possible to efficiently encode the current vertex to be encoded.

Moreover, an encoding device of Example 6 may be the encoding device of any of Examples 1 to 5, in which each edge of the third triangle has connectivity.

According to this, it may be possible to use a third triangle that reflects a characteristic of a three-dimensional mesh to encode the current vertex to be encoded. Therefore, it may be possible to efficiently encode the current vertex to be encoded.

Moreover, an encoding device of Example 7 may be the encoding device of any of Examples 1 to 4, in which the third triangle has a dummy vertex.

According to this, it may be possible to encode the current vertex to be encoded by using a third triangle having an arbitrary vertex. Therefore, it may be possible to flexibly encode the current vertex to be encoded.

Moreover, an encoding device of Example 8 may be the encoding device of any of Examples 1 to 7, in which the exception mode includes sub-modes, and when selecting the exception mode as the mode for encoding the current vertex, the circuit further selects a sub-mode for encoding the current vertex from among the sub-modes.

According to this, it may be possible to encode, in the exception mode, the current vertex to be encoded according to the sub-mode selected from among the plurality of sub-modes. Therefore, it may be possible to encode the current vertex to be encoded according to an exception processing method adaptively selected from among a plurality of exception processing methods.

Moreover, an encoding device of Example 9 may be the encoding device of Example 8, in which the circuit encodes a parameter indicating the sub-mode selected.

According to this, it may be possible for the encoding device and the decoding device to share information of the sub-mode for encoding the current vertex to be encoded according to the parameter. Therefore, it may be possible to apply the same sub-mode to the encoding and the decoding according to the parameter.

Moreover, an encoding device of Example 10 may be the encoding device of Example 8 or 9, in which the circuit determines the third triangle according to the sub-mode selected.

According to this, selecting a sub-mode from among a plurality of sub-modes may make it possible to select a third triangle suitable for encoding. Therefore, it may be possible to efficiently encode the current vertex to be encoded by using a third triangle suitable for the encoding.

Moreover, an encoding device of Example 11 may be the encoding device of any of Examples 8 to 10, in which the circuit determines a vertex of the third triangle according to the sub-mode selected.

According to this, selecting a sub-mode from among a plurality of sub-modes may make it possible to select vertexes of a third triangle suitable for encoding. Therefore, it may be possible to efficiently encode the current vertex to be encoded by using a third triangle suitable for the encoding.

Moreover, an encoding device of Example 12 may be the encoding device of any of Examples 1 to 11, in which the condition includes that each vertex of the first triangle has been encoded.

According to this, it may be possible to prevent a first triangle having a vertex that has not been encoded from being used for encoding the vertexes of the second triangle. In addition, it may be possible to use a mode suitable for the encoding of the vertexes of the second triangle.

Moreover, an encoding device of Example 13 may be the encoding device of any of Examples 1 to 12, in which the condition includes that each edge of the first triangle has connectivity.

According to this, it may be possible to prevent a first triangle having an edge that has no connectivity from being used for encoding the vertexes of the second triangle. In addition, it may be possible to use a mode suitable for the encoding of the vertexes of the second triangle.

Moreover, an encoding device of Example 14 may be the encoding device of any of Examples 1 to 13, in which, when encoding the current vertex according to the exception mode, the circuit encodes an angle indicating the current vertex using the third triangle.

According to this, it may be possible to prevent the code amount from being excessively high. That is, it may be possible to reduce the worst-case code amount.

A decoding device of Example 15 includes: memory; and a circuit accessible to the memory, in which, in operation, the circuit: when a first triangle satisfies a condition, selects a mode for decoding a current vertex to be decoded of a second triangle from among a first set of modes including a normal mode that uses the first triangle to decode the current vertex; when the first triangle does not satisfy the condition, selects the mode from among a second set of modes including an exception mode that uses a third triangle different from the first triangle and the second triangle to decode the current vertex; and decodes the current vertex according to the mode selected.

According to this, when the first triangle does not satisfy the condition, it may be possible to use the third triangle different from the first triangle to decode the vertexes of the second triangle. Therefore, it may be possible to decode the vertexes of the second triangle by using a reference triangle suitable for the decoding.

Moreover, a decoding device of Example 16 may be the decoding device of Example 15, in which the third triangle shares an edge with the first triangle.

According to this, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Moreover, a decoding device of Example 17 may be the decoding device of Example 15 or 16, in which the third triangle shares an edge with the second triangle.

According to this, it may be possible to use a third triangle near the second triangle in the exception mode. Therefore, it may be possible to efficiently decode the current vertex to be decoded by using a third triangle near the current vertex to be decoded.

Moreover, a decoding device of Example 18 may be the decoding device of any of Examples 15 to 17, in which the third triangle shares a vertex with the first triangle.

According to this, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Moreover, a decoding device of Example 19 may be the decoding device of any of Examples 15 to 18, in which each vertex of the third triangle has been decoded.

According to this, it may be possible to use a third triangle that reflects a characteristic of a three-dimensional mesh to decode the current vertex to be decoded. Therefore, it may be possible to efficiently decode the current vertex to be decoded.

Moreover, a decoding device of Example 20 may be the decoding device of any of Examples 15 to 19, in which each edge of the third triangle has connectivity.

According to this, it may be possible to use a third triangle that reflects a characteristic of a three-dimensional mesh to decode the current vertex to be decoded. Therefore, it may be possible to efficiently decode the current vertex to be decoded.

Moreover, a decoding device of Example 21 may be the decoding device of any of Examples 15 to 17, in which the third triangle has a dummy vertex.

According to this, it may be possible to decode the current vertex to be decoded by using a third triangle having an arbitrary vertex. Therefore, it may be possible to flexibly decode the current vertex to be decoded.

Moreover, a decoding device of Example 22 may be the decoding device of any of Examples 15 to 21, in which the exception mode includes sub-modes, and when selecting the exception mode as the mode for decoding the current vertex, the circuit further selects a sub-mode for decoding the current vertex from among the sub-modes.

According to this, it may be possible to decode, in the exception mode, the current vertex to be decoded according to the sub-mode selected from among the plurality of sub-modes. Therefore, it may be possible to decode the current vertex to be decoded according to an exception processing method adaptively selected from among a plurality of exception processing methods.

Moreover, a decoding device of Example 23 may be the decoding device of Example 22, in which the circuit decodes a parameter indicating the sub-mode selected.

According to this, it may be possible for the encoding device and the decoding device to share information of the sub-mode for decoding the current vertex to be decoded according to the parameter. Therefore, it may be possible to apply the same sub-mode to the encoding and the decoding according to the parameter.

Moreover, a decoding device of Example 24 may be the decoding device of Example 22 or 23, in which the circuit determines the third triangle according to the sub-mode selected.

According to this, selecting a sub-mode from among a plurality of sub-modes may make it possible to select a third triangle suitable for decoding. Therefore, it may be possible to efficiently decode the current vertex to be decoded by using a third triangle suitable for the decoding.

Moreover, a decoding device of Example 25 may be the decoding device of any of Examples 22 to 24, in which the circuit determines a vertex of the third triangle according to the sub-mode selected.

According to this, selecting a sub-mode from among a plurality of sub-modes may make it possible to select vertexes of a third triangle suitable for decoding. Therefore, it may be possible to efficiently decode the current vertex to be decoded by using a third triangle suitable for the decoding.

Moreover, a decoding device of Example 26 may be the decoding device of any of Examples 15 to 25, in which the condition includes that each vertex of the first triangle has been decoded.

According to this, it may be possible to prevent a first triangle having a vertex that has not been decoded from being used for decoding the vertexes of the second triangle. In addition, it may be possible to use a mode suitable for the decoding of the vertexes of the second triangle.

Moreover, a decoding device of Example 27 may be the decoding device of any of Examples 15 to 26, in which the condition includes that each edge of the first triangle has connectivity.

According to this, tit may be possible to prevent a first triangle having an edge that has no connectivity from being used for decoding the vertexes of the second triangle. In addition, it may be possible to use a mode suitable for the decoding of the vertexes of the second triangle.

Moreover, a decoding device of Example 28 may be the decoding device of any of Examples 15 to 27, in which, when decoding the current vertex according to the exception mode, the circuit decodes an angle indicating the current vertex using the third triangle.

According to this, it may be possible to prevent the code amount from being excessively high. That is, it may be possible to reduce the worst-case code amount.

Moreover, an encoding method of Example 29 includes: when a first triangle satisfies a condition, selecting a mode for encoding a current vertex to be encoded of a second triangle from among a first set of modes including a normal mode that uses the first triangle to encode the current vertex; when the first triangle does not satisfy the condition, selecting the mode from among a second set of modes including an exception mode that uses a third triangle different from the first triangle and the second triangle to encode the current vertex; and encoding the current vertex according to the mode selected.

According to this, when the first triangle does not satisfy the condition, it may be possible to use the third triangle different from the first triangle to encode the vertexes of the second triangle. Therefore, it may be possible to encode the vertexes of the second triangle by using a reference triangle suitable for the encoding.

Moreover, a decoding method of Example 30 includes: when a first triangle satisfies a condition, selecting a mode for decoding a current vertex to be decoded of a second triangle from among a first set of modes including a normal mode that uses the first triangle to decode the current vertex; when the first triangle does not satisfy the condition, selecting the mode from among a second set of modes including an exception mode that uses a third triangle different from the first triangle and the second triangle to decode the current vertex; and decoding the current vertex according to the mode selected.

According to this, when the first triangle does not satisfy the condition, it may be possible to use the third triangle different from the first triangle to decode the vertexes of a second triangle. Therefore, it may be possible to decode the vertexes of the second triangle by using a reference triangle suitable for the decoding.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

<Expressions and terms>

The following expressions and terms will be used herein.

(1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

(2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

(3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

(4) Attribute information

Attribute information is information indicating an attribute of a vertex or a face. For example, attribute information indicates an attribute such as a color, an image, a normal vector, and the like associated with a vertex or a face. Attribute information may be expressed as "texture".

(5) Face

A face is an element that constitutes a three-dimensional mesh. Specifically, a face is a polygon on a plane in a three-dimensional space. For example, a face can be determined as a triangle in the three-dimensional space.

(6) Plane

A plane is a two-dimensional plane in a three-dimensional space. For example, a polygon is formed on a plane and a plurality of polygons are formed on a plurality of planes.

(7) Bitstream

A bitstream corresponds to encoded information. A bitstream can also be expressed as a stream, an encoded bitstream, a compressed bitstream, or an encoded signal.

(8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

(9) Ordinal numbers

[0082] In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

<Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

<System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream.

Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

<Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

<Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

<Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, vertex information, connection information, and attribute information are integrated in the bitstream. For example, vertex information, connection information, and attribute information may be included in one file.

In addition, a plurality of portions of the pieces of information may be sequentially stored such as a first portion of vertex information, a first portion of connection information, a first portion of attribute information, a second portion of vertex information, a second portion of connection information, a second portion of attribute information, ... The plurality of portions may correspond to a plurality of temporally different portions, correspond to a plurality of spatially different portions, or correspond to a plurality of different faces.

Furthermore, an order of storage of vertex information, connection information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and vertex information, connection information, and attribute information are respectively stored in different files. While a file including vertex information, a file including connection information, and a file including attribute information are illustrated here, storage formats are not limited to this example. For example, two types of information among vertex information, connection information, and attribute information may be included in one file and the one remaining type of information may be included in another file.

Alternatively, the pieces of information can be stored by being divided into a larger number of files. For example, a plurality of portions of vertex information may be stored in a plurality of files, a plurality of portions of connection information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of vertex information, connection information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and vertex information, connection information, and attribute information are respectively stored in different sub-bitstreams.

While a sub-bitstream including vertex information, a sub-bitstream including connection information, and a sub-bitstream including attribute information are illustrated here, storage formats are not limited to this example.

For example, two types of information among vertex information, connection information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of vertex information and connection information.

In addition, each sub-bitstream may include a plurality of files. Furthermore, a plurality of portions of vertex information may be stored in a plurality of files, a plurality of portions of connection information may be stored in a plurality of files, and a plurality of portions of attribute information may be stored in a plurality of files.

<Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and M = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called VDMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

<Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

<Reference example related to encoding and decoding of vertex information>

For example, in encoding and decoding of vertex information, a parallelogram prediction system which predicts a position of a vertex may be used.

FIG. 26 is a conceptual diagram illustrating a parallelogram prediction system according to the reference example. For example, after vertex information of first vertex A, second vertex B, and third vertex C of a first triangle is encoded, vertex information of fourth vertex D of a second triangle which has same second vertex B and third vertex C as the first triangle is encoded. In doing so, using the parallelogram prediction system, a position of fourth vertex D is predicted from first vertex A, second vertex B, and third vertex C and an error with respect to the prediction is encoded.

Specifically, first, from first triangle ABC, vertex P of virtual parallelogram ABCP having diagonal BC and diagonal AP is calculated as a predicted point. A coordinate value of vertex P is derived using coordinate values of first vertex A, second vertex B, and third vertex C of first triangle ABC ($P = B + C - A$). In addition, an error vector indicating a difference between vertex D and vertex P in a three-dimensional space is encoded.

In a more complex version, a plurality of triangles are used. In this approach, while compression processing takes more time, a more superior prediction is realized.

In encoding and decoding of vertex information, a polynomial prediction system which predicts a position of a vertex may be used. In the polynomial prediction system, a position of a new vertex is predicted using a local configuration. Specifically, coordinate values of several vertexes in a local vicinity are supplied to a polynomial function having coefficients determined in advance and the position of the new vertex is predicted according to the polynomial function. The vertexes used to predict a new vertex are selected according to specific conditions.

FIG. 27 is a conceptual diagram illustrating a polynomial prediction system according to a reference example. For example, in FIG. 27, a predicted point of a next vertex is derived using four encoded vertexes. In other words, in FIG. 27, coordinate values of vertex #1, vertex #2, vertex #3, and vertex #4 are used in order to predict vertex #5. An error vector indicating an error with respect to a prediction is encoded in a similar manner to the parallelogram prediction system.

In the reference examples, vertex information is encoded using an error vector calculated according to a prediction system such as the parallelogram prediction system, the polynomial prediction system, or the like. Regardless of the complexity of the prediction systems, guaranteeing that a magnitude of the errors are within a specific range is difficult. For example, in an obtuse triangle, a larger error vector than in an equilateral triangle tends to be created. In addition, a smoothness of a shape and a size of a face affect a magnitude of the error. Therefore, there is a possibility that more bits are to be used for signaling of vertex information.

<First aspect of encoding and decoding of vertex information>

In the present aspect, a non-common vertex of an adjacent triangle with respect to a reference triangle is encoded using three angles including a dihedral angle and two other angles. In other words, when vertex information is encoded using a spatial relationship between adjacent triangles, only three angles are encoded. Accordingly, the number of bits may possibly be reduced.

A positive or negative sign of an angle may be used to indicate an orientation of the angle with respect to an edge. A rule determined in advance may be adopted in which a positive value indicates a clockwise orientation with respect to a reference and a negative value indicates a counterclockwise orientation with respect to the reference.

For example, a dihedral angle formed between a first triangle being a reference triangle and a second triangle being a current triangle to be processed enables a two-dimensional plane of the second triangle to be found. Therefore, the complexity of three dimensions can be reduced to two dimensions to which simpler laws on a plane can be applied.

A dihedral angle between adjacent faces may be calculated using a face normal. In addition, a corresponding triangle which is a virtual congruent triangle being one-to-one with respect to the second triangle is constructed on a plane of the first triangle. The first triangle and the corresponding triangle have a common edge and are positioned on opposite sides with respect to the common edge. The vertex of the corresponding triangle is identified using two angles. Therefore, the vertex of the second triangle is identified based on the dihedral angle formed between the first triangle and the second triangle and the two angles for identifying the vertex of the corresponding triangle which is congruent with the second triangle.

Therefore, vertex information of the second triangle can be encoded based on three angles including a dihedral angle and two other angles. In addition, accordingly, a value of an encoding object can be prevented from becoming excessively large according to an expression range of an angle. As a result, a worst-case amount of encoding can be suppressed regardless of characteristics and a quality of a three-dimensional mesh.

In addition, values of the angles tend to follow a specific distribution. Therefore, a compression ratio can be improved by using such a tendency. For example, the distribution of angles may be studied and a difference with respect to an average of the distribution may be encoded.

<Example of encoding processing according to first aspect>

FIG. 28 is a flow chart illustrating an example of encoding processing according to the present aspect. First, a first vertex, a second vertex, and a third vertex are derived from a three-dimensional mesh (S101). In this case, the first vertex, the second vertex, and the third vertex form a first triangle on a first plane of the three-dimensional mesh. In addition, for example, the first vertex, the second vertex, and the third vertex are three vertexes that have already been encoded.

Next, a first angle, a second angle, and a third angle for deriving a fourth vertex of a second triangle which is formed on a second plane of the three-dimensional mesh using edges in common with the first triangle are derived (S102).

In addition, the first angle, the second angle, and the third angle are encoded to a bitstream (S103).

FIG. 29 is a flow chart illustrating a specific example of encoding processing according to the present aspect. First, a coordinate value of each vertex of a first face is encoded from a three-dimensional mesh (S111). The first face may be randomly selected.

Next, processing traverses to a next face (S112). In addition, a traversal symbol indicating a traversal instruction and a processing mode of a vertex is written to the bitstream.

At this point, when vertexes of the face have already been encoded (Yes in S113), encoding of the vertexes is skipped. In addition, when all faces have not been traversed, processing traverses to a next face. Note that when all faces have been traversed, processing may be ended.

On the other hand, when vertexes have not been encoded (No in S113), a processing mode of vertexes is designated according to the written traversal symbol.

A vertex is encoded using a coordinate value or an angle. For example, when the traversal symbol indicates coordinates (coordinates in S114), a vertex coordinate value (x, y, z) is directly encoded (S115). This method may be selected at start of encoding when none of the vertexes have been encoded. In addition, for example, when the traversal symbol indicates angles (angles in S114), a vertex is encoded using three angles (S116).

An additional residual error may be calculated or signaling may be separately performed after the signaling of angles. In an example where a floating-point value of an angle is to be fully expressed for the purpose of lossless encoding, a fractional portion of the floating-point value of the angle may be encoded as a residual error value after encoding an integer portion of the floating-point value of the angle. The traversal processing is continued until the entire three-dimensional mesh is traversed (S119).

A traversal symbol indicating any of skip, end, and execute may be encoded. Skip corresponds to a situation where a vertex has already been processed. End corresponds to a situation where all vertexes have already been processed. Execute corresponds to a situation where a vertex needs to be processed. In addition, when a traversal symbol indicating execute is encoded, a processing mode indicating either coordinates or angles may be encoded separately from the traversal symbol. A processing mode can also be expressed as a mode, an operating mode, a prediction mode, an encoding mode, or a decoding mode.

FIG. 30 is a flow chart illustrating another specific example of encoding processing according to the present aspect. In this example, the encoding processing according to the reference example is integrated with the encoding processing illustrated in FIG. 29. First, a coordinate value of each vertex of a first face is encoded from a three-dimensional mesh (S111).

Next, processing traverses to a next face (S112). In addition, a traversal symbol indicating a traversal instruction and a processing mode of a vertex are written to the bitstream.

At this point, when vertexes of the face have already been encoded (Yes in S113), encoding of the vertexes is skipped. In addition, when all faces have not been traversed, processing traverses to a next face. Note that when all faces have been traversed, processing may be ended.

On the other hand, when vertexes have not been encoded (No in S113), a processing mode of vertexes is designated according to the written traversal symbol.

A vertex is encoded using coordinates, angles, a parallelogram, or a polynomial. For example, when the traversal symbol indicates coordinates (coordinates in S114), a vertex coordinate value (x, y, z) is directly encoded (S115). This method may be selected at start of encoding when none of the vertexes have been encoded. In addition, for example, when the traversal symbol indicates angles (angles in S114), a vertex is encoded using three angles (S116).

Furthermore, for example, when the traversal symbol indicates a parallelogram (a parallelogram in S114), a vertex is encoded using a parallelogram (S117). In addition, for example, when the traversal symbol indicates a polynomial (a polynomial in S114), a vertex is encoded using a polynomial (S118).

An optimal processing mode may be determined based on a minimum cost among a plurality of costs which are calculated based on an encoding rate and a distortion with respect to a plurality of processing modes. The cost of an encoding rate and a distortion can be calculated based on the number of bits to be signaled and an error between an actual value and a predicted value. In addition, an optimal processing mode corresponding to a minimum error can be selected solely based on the error between an actual value and a predicted value.

The traversal processing is continued until the entire three-dimensional mesh is traversed (S119).

A traversal symbol indicating any of skip, end, and execute may be encoded. In addition, when a traversal symbol indicating execute is encoded, a processing mode indicating any of coordinates, angles, a parallelogram, and a polygon may be encoded separately from the traversal symbol. Note that when a processing mode has been determined in advance, the processing mode need not be encoded and processing steps need not be switched.

For example, as illustrated in FIGS. 31, 32, and 33, a first triangle has first vertex A, second vertex B, and third vertex C, a second triangle has second vertex B, third vertex C, and fourth vertex D, and a corresponding triangle has second vertex B, third vertex C, and fifth vertex E.

FIG. 31 is a conceptual diagram illustrating an example of three angles according to the present aspect. In the example, two internal angles of the corresponding triangle are used as second angle $\beta$ and third angle $\gamma$. In addition, in the example, two internal angles of the corresponding triangle are in contact with a common edge. Furthermore, in the example, second angle $\beta$ and third angle $\gamma$ are calculated according to Expression (1) below.

[Math. 1]

$$\beta = \frac{|CB|^2 + |CE|^2 - |BE|^2}{2 \times |CB| \times |CE|}$$

$$\gamma = \frac{|CB|^2 + |BE|^2 - |CE|^2}{2 \times |CB| \times |BE|}$$

$$\cdots (1)$$

FIG. 32 is a conceptual diagram illustrating another example of three angles according to the present aspect. In the example, an angle in contact with line AE is used as second angle $\beta$ and one of the internal angles of the corresponding triangle which is in contact with common edge BC is used as third angle $\gamma$. In the example, second angle $\beta$ and third angle $\gamma$ are calculated according to Expression (2) below.

[Math. 2]

$$\beta = \frac{|AB|^2 + |AE|^2 - |BE|^2}{2 \times |AB| \times |AE|}$$

$$\gamma = \frac{|CB|^2 + |BE|^2 - |CE|^2}{2 \times |CB| \times |BE|}$$

$$\cdots (2)$$

FIG. 33 is a conceptual diagram illustrating yet another example of three angles according to the present aspect. In the example, one of the internal angles of the corresponding triangle is used as second angle $\beta$ and an angle formed between AB and AQ is used as third angle $\gamma$. Point Q is an orthogonal projection of fifth vertex E with respect to common edge BC. In the example, second angle $\beta$ and third angle $\gamma$ are calculated according to Expression (3) below.

[Math. 3]

$$\beta = \frac{|CB|^2 + |CE|^2 - |BE|^2}{2 \times |CB| \times |CE|}$$

$$\gamma = \frac{|AB|^2 + |AQ|^2 - |BQ|^2}{2 \times |AB| \times |AQ|}$$

$$\cdots (3)$$

In FIGS. 31, 32, and 33, a dihedral angle between planes of the first triangle and the second triangle is used as first angle $\theta$. First angle $\theta$ can be calculated using face normals of the triangles. For example, it is assumed that normal vectors of the first triangle and the second triangle are respectively $n_1 = [x_1, y_1, z_1]$ and $n_2 = [x_2, y_2, z_2]$ and are assumed to be normalized. Under such an assumption, first angle $\theta$ between planes of the first triangle and the second triangle is calculated according to, for example, $\theta = \pi - \cos^{-1}(n_1 n_2)$ (or $\theta = \cos^{-1}(n_1 n_2)$).

FIG. 34 is a syntax diagram illustrating a syntax structure example of vertex information with respect to a plurality of vertexes according to the present aspect. In the example, after three vertexes are encoded, a traversal symbol is encoded with respect to each of the other vertexes. In addition, whether or not the vertex is to be encoded is controlled according to the traversal symbol.

FIG. 35 is a syntax diagram illustrating a syntax structure example of vertex information with respect to one vertex according to the present aspect. In the example, when prediction_mode is equivalent to only_angles_mode, derived angles with respect to the first angle, the second angle, and the third angle are directly encoded.

FIG. 36 is a syntax diagram illustrating another syntax structure example of vertex information with respect to one vertex according to the present aspect. In the example, according to is_init_angles, another method of deriving or predicting three angles without direct encoding is used. The example of a method of deriving or predicting three angles is a method of using a history list of previously encoded angles. Specifically, when three angles that are objects of encoding are not the three initial angles, the three angles are derived or predicted using a history list of previously encoded angles.

FIG. 37 is a table diagram illustrating an example of a table used in prediction of an angle. In the example, a previously encoded angle and an index are associated with each other and stored in a table. Angles to be stored in the table may be calculated by averaging three previously encoded angles. Angles stored in the table may be controlled in a first-in, first-out manner, controlled according to an occurrence rate of values, or controlled according to a combination thereof. Indexes may be fixed values.

In addition, one of a plurality of angles in the table is used as a predicted angle. When writing a syntax element, only an index value corresponding to the predicted angle and delta being a difference between an actual angle and the predicted angle are written into a bitstream.

FIG. 38 is a table diagram illustrating another example of a table used in prediction of an angle. In the example, a first angle, a second angle, and a third angle which have previously been encoded are associated with an index and stored in a table. Angles stored in the table may be controlled in a first-in, first-out manner, controlled according to an occurrence rate of values, or controlled according to a combination thereof. Indexes may be fixed values.

In addition, one combination among a plurality of combinations in the table is used as a combination of predicted angles. When writing a syntax element, only an index value corresponding to the combination of predicted angles and delta being a difference between actual angles and the predicted angles are written into a bitstream.

FIG. 39 is a conceptual diagram illustrating an example of prediction using an angle with respect to a vertex of a previous triangle. In this example, three angles with respect to a vertex of a present triangle are derived or predicted using three angles with respect to a vertex of a previous triangle. The previous triangle is a triangle that is traversed before the present triangle. The previous triangle may be a triangle which immediately precedes the present triangle or a triangle which is adjacent to the present triangle.

Specifically, in this example, syntax values corresponding to three angles with respect to a vertex of the present triangle are determined using three angles (10°, 30°, and 60°) with respect to a vertex of the previous triangle. For example, when the first angle with respect to a vertex of the present triangle is 9°, 10° - 9° = 1° is written as a syntax value.

FIG. 40 is a conceptual diagram illustrating an example of prediction using an angle with respect to a vertex of a previous three-dimensional mesh. In this example, three angles are derived or predicted using a plurality of angles with respect to a plurality of vertexes of the previous three-dimensional mesh.

For example, the previous three-dimensional mesh is a three-dimensional mesh which spatially differs from the present three-dimensional mesh and is a three-dimensional mesh having been processed before the present three-dimensional mesh. Alternatively, for example, the previous three-dimensional mesh is a three-dimensional mesh which temporally differs from the present three-dimensional mesh and is a three-dimensional mesh having been processed before the present three-dimensional mesh.

A plurality of first angles, a plurality of second angles, and a plurality of third angles with respect to a plurality of vertexes of the previous three-dimensional mesh may be averaged and signaled by the present three-dimensional mesh. For example, as a syntax value, first delta = first angle x - average first angle is determined and written. For example, this method can be used in a dynamic mesh in which a plurality of adjacent frames have spatial redundancy.

FIG. 41 is a block diagram illustrating a configuration example of encoding device 100 according to the present aspect. Encoding device 100 encodes a three-dimensional mesh into a bitstream. As illustrated in FIG. 41, encoding device 100 may include traverser 161, switch 162, angle deriver 163, angle encoder 164, coordinate encoder 165, and entropy encoder 166.

Traverser 161 acquires a three-dimensional mesh. In addition, traverser 161 determines a vertex that is an object of encoding in the three-dimensional mesh and outputs the vertex to any of angle deriver 163 and coordinate encoder 165 via switch 162. In an example, traverser 161 selects coordinate encoder 165 with respect to first three vertexes of the three-dimensional mesh and selects angle deriver 163 with respect to other vertexes.

For example, coordinate encoder 165 captures three vertexes which form a first triangle on a first plane and encodes the three vertexes. Delta encoding may be used to encode the three vertexes. Specifically, a coordinate value of first vertex A may be directly encoded and a difference between the coordinate value of first vertex A and a coordinate value of second vertex B and a difference between the coordinate value of first vertex A and a coordinate value of third vertex C may be encoded.

Angle deriver 163 captures fourth vertex D which forms a second triangle on a second plane using second vertex B and third vertex C, derives three angles for identifying fourth vertex D, and outputs the three derived angles to angle encoder 164. The second plane may differ from the first plane or may be the same as the first plane. As described above, FIGS. 31, 32, and 33 illustrate different examples related to three angles.

Angle encoder 164 encodes the three angles. An additional residual error may be calculated and separately signaled after the signaling of angles. In an example where a floating-point value of an angle is to be fully expressed for the purpose of lossless encoding, angle encoder 164 may encode a fractional portion of the floating-point value of the angle as a residual error value after encoding an integer portion of the floating-point value of the angle.

Encoding information obtained by coordinate encoder 165 and encoding information obtained by angle encoder 164 are sent to entropy encoder 166 and are also fed back to traverser 161. Entropy encoder 166 compresses the encoding information and outputs a bitstream. Traverser 161 uses the encoding information to determine a next traversal.

An encoding system to which entropy encoding conforms may be any of Huffman coding, arithmetic coding, range coding, ANS (asymmetric numeral systems), and CABAC (context-adaptive binary arithmetic coding).

Encoding device 100 encodes a three-dimensional mesh according to the configuration and processing described above. Accordingly, a code amount of the three-dimensional mesh may be suppressed.

While the corresponding triangle is a triangle congruent to the second triangle in the description provided above, the corresponding triangle may be a triangle similar to the second triangle. Even when the second triangle and the corresponding triangle are similar to each other, as long as a relation between the second triangle and the corresponding triangle is known, fourth vertex D can be derived from fifth vertex E according to the relation between the second triangle and the corresponding triangle. In addition, the corresponding triangle may be an orthogonal projection of the second triangle with respect to the first plane. Even in this case, fourth vertex D can be derived from fifth vertex E according to the relation between the second triangle and the corresponding triangle.

<Example of decoding processing according to first aspect>

FIG. 42 is a flow chart illustrating an example of decoding processing according to the present aspect. First, a first vertex, a second vertex, and a third vertex are derived from a three-dimensional mesh (S201). In this case, the first vertex, the second vertex, and the third vertex form a first triangle on a first plane of the three-dimensional mesh. In addition, for example, the first vertex, the second vertex, and the third vertex are three vertexes that have already been decoded.

Next, a first angle, a second angle, and a third angle for deriving a fourth vertex of a second triangle which is formed on a second plane of the three-dimensional mesh using edges in common with the first triangle are decoded from a bitstream (S202). In addition, the fourth vertex is derived using the first angle, the second angle, and the third angle (S203).

FIG. 43 is a flow chart illustrating a specific example of decoding processing according to the present aspect. Decoding processing starts by decoding a coordinate value of each vertex of an initial face having been initially encoded (S211). Subsequently, a traversal symbol of the present face is decoded (S212). In addition, a determination is made as to which of coordinates, angles, skip, and end the traversal symbol indicates (S213).

For example, when the traversal symbol indicates coordinates (coordinates in S213), a vertex coordinate value (x, y, z) is directly decoded (S214). In addition, for example, when the traversal symbol indicates angles (angles in S213), a vertex is decoded using three angles (S215). Furthermore, when the traversal symbol indicates skip (skip in S213), processing with respect to the next face is repeated. Moreover, when the traversal symbol indicates end (end in S213), processing is ended.

A traversal symbol indicating any of skip, end, and execute may be decoded. Skip corresponds to a situation where a vertex has already been processed. End corresponds to a situation where all vertexes have already been processed. Execute corresponds to a situation where a vertex needs to be processed. In addition, when a traversal symbol indicating execute is decoded, a processing mode indicating either coordinates or angles may be decoded separately from the traversal symbol. A processing mode can also be expressed as a mode, an operating mode, a prediction mode, an encoding mode, or a decoding mode.

FIG. 44 is a flow chart illustrating another specific example of decoding processing according to the present aspect. In this example, the decoding processing according to the reference example is integrated with the decoding processing illustrated in FIG. 43. Decoding processing starts by decoding a coordinate value of each vertex of an initial face having been initially encoded (S211). Subsequently, a traversal symbol of the present face is decoded (S212). In addition, a determination is made as to which of coordinates, angles, skip, and end the traversal symbol indicates (S213).

For example, when the traversal symbol indicates coordinates (coordinates in S213), a vertex coordinate value (x, y, z) is directly decoded (S214). In addition, for example, when the traversal symbol indicates angles (angles in S213), a vertex is decoded using three angles (S215). Furthermore, when the traversal symbol indicates a parallelogram (a parallelogram in S213), a vertex is decoded using a parallelogram (S216). In addition, for example, when the traversal symbol indicates a polynomial (a polynomial in S213), a next vertex is decoded using a polynomial.

Furthermore, when the traversal symbol indicates skip (skip in S213), processing with respect to the next face is repeated. Moreover, when the traversal symbol indicates end (end in S213), processing is ended.

A traversal symbol indicating any of skip, end, and execute may be decoded. In addition, when a traversal symbol indicating execute has been decoded, a processing mode indicating any of coordinates, angles, a parallelogram, and a polygon may be decoded separately from the traversal symbol. Note that when a processing mode has been determined in advance, the processing mode need not be decoded and processing steps need not be switched.

FIG. 34 is a syntax diagram illustrating a syntax structure example of vertex information with respect to a plurality of vertexes according to the present aspect. In the example, after three vertexes are decoded, a traversal symbol is decoded with respect to each of the other vertexes. In addition, whether or not vertexes are to be decoded is controlled according to the traversal symbol.

FIG. 35 is a syntax diagram illustrating a syntax structure example of vertex information with respect to one vertex according to the present aspect. In the example, when prediction_mode is equivalent to only_angles_mode, derived angles with respect to the first angle, the second angle, and the third angle are directly decoded.

FIG. 36 is a syntax diagram illustrating another syntax structure example of vertex information with respect to one vertex according to the present aspect. In the example, according to is_init_angles, another method of deriving or predicting three angles without direct decoding is used. The example of a method of deriving or predicting three angles is a method of using a history list of previously decoded angles. Specifically, when three angles that are objects of decoding are not the three initial angles, the three angles are derived or predicted using a history list of previously decoded angles.

FIG. 37 is a table diagram illustrating an example of a table used in prediction of an angle. In the example, a previously decoded angle and an index are associated with each other and stored in a table. The angle to be stored in the table may be calculated by averaging three previously decoded angles. Angles stored in the table may be controlled in a first-in, first-out manner, controlled according to an occurrence rate of values, or controlled according to a combination thereof. Indexes may be fixed values.

In addition, one of a plurality of angles in the table is used as a predicted angle. When decoding a syntax element, only an index value corresponding to the predicted angle and delta being a difference between an actual angle and the predicted angle are decoded from a bitstream.

FIG. 38 is a table diagram illustrating another example of a table used in prediction of an angle. In the example, a first angle, a second angle, and a third angle which have previously been decoded are associated with an index and stored in a table. Angles stored in the table may be controlled in a first-in, first-out manner, controlled according to an occurrence rate of values, or controlled according to a combination thereof. Indexes may be fixed values.

In addition, one combination among a plurality of combinations in the table is used as a combination of predicted angles. When decoding a syntax element, only an index value corresponding to the combination of predicted angles and delta being a difference between actual angles and the predicted angles are decoded from a bitstream.

FIG. 39 is a conceptual diagram illustrating an example of prediction using an angle with respect to a vertex of a previous triangle. In this example, three angles with respect to a vertex of a present triangle are derived or predicted using three angles with respect to a vertex of a previous triangle. The previous triangle is a triangle that is traversed before the present triangle. The previous triangle may be a triangle which immediately precedes the present triangle or a triangle which is adjacent to the present triangle.

Specifically, in this example, syntax values corresponding to three angles with respect to a vertex of the present triangle are determined using three angles (10°, 30°, and 60°) with respect to a vertex of the previous triangle. For example, when first delta with respect to a vertex of the present triangle is 1°, 10° - 9° = 1° is derived as a first angle.

FIG. 40 is a conceptual diagram illustrating an example of prediction using an angle with respect to a vertex of a previous three-dimensional mesh. In this example, three angles are derived or predicted using a plurality of angles with respect to a plurality of vertexes of the previous three-dimensional mesh.

For example, the previous three-dimensional mesh is a three-dimensional mesh which spatially differs from the present three-dimensional mesh and is a three-dimensional mesh having been processed before the present three-dimensional mesh. Alternatively, for example, the previous three-dimensional mesh is a three-dimensional mesh which temporally differs from the present three-dimensional mesh and is a three-dimensional mesh having been processed before the present three-dimensional mesh.

A plurality of first angles, a plurality of second angles, and a plurality of third angles with respect to a plurality of vertexes of the previous three-dimensional mesh may be averaged and signaled by the present three-dimensional mesh. For example, from a syntax value, first angle x = average first angle + first delta is derived. For example, this method can be used in a dynamic mesh in which a plurality of adjacent frames have spatial redundancy.

Additional residual error may be decoded after decoding three angles. In an example, a value decoded as an angle may represent an integer portion of a floating-point value of the angle and a value decoded as a residual error may represent a fractional portion of the floating-point value of the angle. An actual angle is obtained by adding the fractional portion to the integer portion.

For example, as illustrated in FIGS. 31, 32, and 33, a first triangle has first vertex A, second vertex B, and third vertex C, a second triangle has second vertex B, third vertex C, and fourth vertex D, and a corresponding triangle has second vertex B, third vertex C, and fifth vertex E.

In deriving fourth vertex D of the second triangle, first, fifth vertex E being a projection of fourth vertex D with respect to the first plane including the first triangle is calculated using the second angle and the third angle. Subsequently, fourth vertex D is calculated from fifth vertex E using the first angle being a dihedral angle between the first triangle and the second triangle.

FIG. 31 is a conceptual diagram illustrating an example of three angles according to the present aspect. In the example, two internal angles of the corresponding triangle are used as second angle β and third angle γ. In other words, in the example, two internal angles of the corresponding triangle are decoded from a bitstream. Expression (4) below is obtained by applying the sine law to triangle CBE.

[Math. 4]

$$|BE| = \frac{|CB| \times \sin\beta}{\sin\beta + \gamma}$$

$$|CE| = \frac{|CB| \times \sin\gamma}{\sin\beta + \gamma}$$

$$\cdots (4)$$

When second angle β, third angle γ, and edge CB are given, a coordinate value of fifth vertex E is derived from Expression (4) above.

FIG. 32 is a conceptual diagram illustrating another example of three angles according to the present aspect. In the example, an angle in contact with line AE is used as second angle β and one of the internal angles of the corresponding triangle which is in contact with common edge BC is used as third angle γ. In the example, after first vertex A, second vertex B, and third vertex C are decoded from a bitstream, fourth angle δ formed between BA and BC is derived according to Expression (5) below.

[Math. 5]

$$\delta = \frac{|AB|^2 + |BC|^2 - |AC|^2}{2 \times |AB| \times |BC|} \quad \cdot \cdot \cdot (5)$$

Next, Expression (6) below is obtained by applying the sine law to triangle ABE.

[Math. 6]

$$|BE| = \frac{|AB| \times \sin \beta}{\sin (\beta + \gamma + \delta)} \quad \cdot \cdot \cdot (6)$$

According to Expression (6) above, a magnitude of BE is derived. Therefore, a direction and the magnitude of BE and a plane on which fifth vertex E is positioned become known and the coordinate value of fifth vertex E is derived.

FIG. 33 is a conceptual diagram illustrating yet another example of three angles according to the present aspect. In the example, one of the internal angles of the corresponding triangle is used as second angle β and an angle formed between AB and AQ is used as third angle γ. Point Q is an orthogonal projection of fifth vertex E with respect to common edge BC. Expression (7) below is obtained by applying the sine law to triangle AQB.

[Math. 7]

$$|QB| = \frac{|AB| \times \sin \gamma}{\sin (\gamma + \delta)} \quad \cdot \cdot \cdot (7)$$

According to Expression (7) above, a magnitude of QB is obtained. Therefore, a coordinate value of point Q is derived. Next, Expression (8) below is obtained due to the right triangle rule in triangle CEQ.

[Math. 8]

$$|CE| = \frac{|CQ|}{\cos \beta} \quad \cdot \cdot \cdot (8)$$

According to Expression (8) above, a magnitude of CE is derived. Therefore, a direction and the magnitude of CE and a plane on which fifth vertex E is positioned become known and the coordinate value of fifth vertex E is derived.

Fifth vertex E is derived in processing of each of the plurality of derivation methods described using FIGS. 31, 32, and 33. In addition, fourth vertex D is derived from fifth vertex E. For example, second triangle CBD and corresponding triangle CBE are the same on a one-to-one basis. Furthermore, fourth vertex D and fifth vertex E are on different planes which share common edge CB. In this case, fourth vertex D is derived by rotating fifth vertex E by an amount expressed as π - θ (or θ) around edge BC, where θ denotes the first angle.

FIG. 45 is a table diagram illustrating an example of a look-up table of a sine function and a cosine function. The look-up table illustrated in FIG. 45 may be used in the calculation of the sine function and the cosine function described above.

FIG. 46 is a block diagram illustrating a configuration example of decoding device 200 according to the present aspect. Decoding device 200 decodes a three-dimensional mesh from a bitstream. As illustrated in FIG. 46, decoding device 200 includes traverser 261, switch 262, angle decoder 263, coordinate deriver 264, coordinate decoder 265, and entropy decoder 266.

Entropy decoder 266 acquires a bitstream. Entropy decoder 266 acquires decompression information by decompressing the bitstream and outputs the decompression information. An example of an encoding system to which entropy decoding conforms may be any of Huffman coding, arithmetic coding, range coding, ANS (asymmetric numeral systems), and CABAC (context-adaptive binary arithmetic coding).

Decompression information is input to traverser 261. Traverser 261 interprets the decompression information and outputs the decompression information to any of angle decoder 263 and coordinate decoder 265 via switch 262.

Coordinate decoder 265 decodes three vertexes which form a first triangle on a first plane from decompression information. As an example of decoding three vertexes, a coordinate value of first vertex A and two difference values are decoded from decompression information. Next, a coordinate value of second vertex B and a coordinate value of third vertex C are derived by adding the two difference values to the coordinate value of first vertex A.

Angle decoder 263 decodes three angles from the decompression information and outputs the three angles to coordinate deriver 264.

Using the three angles, coordinate deriver 264 derives a vertex of the second triangle which shares a common edge with the first triangle. The second triangle may be on a different plane from the first plane or may be on the same plane as the first plane. Specifically, coordinate deriver 264 derives a vertex of the second triangle from the three angles using the derivation method described above with reference to FIGS. 31, 32, and 33.

Vertex information indicating the vertex obtained by coordinate deriver 264 or coordinate decoder 265 is output as vertex information of the three-dimensional mesh. In addition, the vertex information is fed back to traverser 261 to be used to determine a next traversal.

Decoding device 200 decodes a three-dimensional mesh according to the configuration and processing described above. Accordingly, a code amount of the three-dimensional mesh may be suppressed.

While the corresponding triangle is a triangle congruent to the second triangle in the description provided above, the corresponding triangle may be a triangle similar to the second triangle. Even when the second triangle and the corresponding triangle are similar to each other, as long as a relation between the second triangle and the corresponding triangle is known, fourth vertex D can be derived from fifth vertex E according to the relation between the second triangle and the corresponding triangle. In addition, the corresponding triangle may be an orthogonal projection of the second triangle with respect to the first plane. Even in this case, fourth vertex D can be derived from fifth vertex E according to the relation between the second triangle and the corresponding triangle.

<Supplement to first aspect of encoding and decoding of vertex information>

The encoding processing of vertex information according to the present disclosure can be applied to, for example, encoding of position information of a point in a point cloud compression system such as V-PCC (point cloud compression) or G-PCC (geometry-based point cloud compression).

Encoding device 100 encodes information for identifying fourth vertex D of the second triangle from the first triangle of reference or first vertex A, second vertex B, and third vertex C being the three vertexes of the first triangle of reference. Decoding device 200 decodes information for identifying fourth vertex D of the second triangle from the first triangle of reference or first vertex A, second vertex B, and third vertex C being the three vertexes of the first triangle of reference.

The information for identifying fourth vertex D includes dihedral angle information indicating a dihedral angle and identifying information for identifying fifth vertex E. The dihedral angle indicated by the dihedral angle information is a dihedral angle formed between the first plane which includes the first triangle and the second plane which includes the second triangle. Fifth vertex E identified by the identifying information is a vertex which is on the first plane and which is a vertex of the corresponding triangle which corresponds to the second triangle.

Since fifth vertex E is a vertex on the first plane, fifth vertex E is relatively readily identifiable from the first triangle on the first plane. In addition, fourth vertex D can be derived from fifth vertex E according to the relation between the second triangle and the corresponding triangle and the dihedral angle formed between the first plane and the second plane. Since the dihedral angle ranges from, for example, -180 degrees to 180 degrees, an increase in a code amount is inhibited. Therefore, efficient encoding and decoding of fourth vertex D can be performed by the configuration and the processing described above.

Note that information for identifying fourth vertex D may include, as the identifying information described above or in place of the identifying information described above, "(1) position information of a vertex (fifth vertex E) of a polygon (corresponding triangle BEC)" or "(2) information related to a position and a shape of a polygon (corresponding triangle BEC)".

In addition, information for identifying fourth vertex D may include, as the dihedral angle information described above or in place of the dihedral angle information described above, "(3) information indicating a distance between a position of a vertex (fifth vertex E) of a polygon (corresponding triangle BEC) and a position of a processing object vertex (fourth vertex D) and a direction". Furthermore, information for identifying fourth vertex D may include, as the dihedral angle information described above or in place of the dihedral angle information described above, "(4) information indicating a difference between a plane including a polygon (corresponding triangle BEC) and a plane including a polygon (second triangle BDC) including a processing object vertex (fourth vertex D)".

In addition, any of the pieces of information described above may be indicated using an angle. Accordingly, there is a possibility that a code amount may be reduced and flexibility and accuracy of prediction may improve. Furthermore, information indicating which of the pieces of information described above is to be used may be encoded.

In addition, for example, the following example may be added to the configuration and the processing described above or at least a part of the configuration and the processing described above may be replaced with the following example.

For example, "(1) position information of a vertex of a polygon" may indicate coordinate values of second vertex B, third vertex C, and fifth vertex E of corresponding triangle BEC. When information related to a position and a shape of the first triangle that is a reference or position information of first vertex A, second vertex B, and third vertex C is identified, the position information of the vertex of the polygon may only indicate the coordinate value of fifth vertex E.

When using fifth vertex E that exists on a same plane as the plane including first triangle ABC in order to derive position information of fourth vertex D that is a processing object is prescribed or specified in advance, the coordinate value of fifth vertex E may be expressed by a two-dimensional coordinate value. A coordinate value may be expressed using a difference from another coordinate value and the coordinate value of fifth vertex E may be expressed using a vector indicating a difference with respect to the coordinate value of first vertex A, second vertex B, or third vertex C.

In addition, for example, the polygon may be a polygon other than a triangle such as a square.

For example, "(2) information related to a position and a shape of a polygon" may be information that identifies a position and a shape of corresponding triangle BEC. When information related to a position and a shape of first triangle ABC that is a reference or position information of first vertex A, second vertex B, and third vertex C is identified, the information identifying the position and the shape of corresponding triangle BEC may indicate information indicating edge BC, an angle formed between edge BC and edge CE, and an angle formed between edge BC and edge BE. In this case, the information indicating edge BC corresponds to information indicating that corresponding triangle BEC is to be used.

Information indicating first vertex A may be encoded instead of information indicating edge BC. Information indicating first vertex A corresponds to information indicating that fifth vertex E is on an opposite side to first vertex A with edge BC therebetween.

When using corresponding triangle BEC on a same plane as first triangle ABC in order to derive position information of fourth vertex D that is a processing object is prescribed or specified in advance, only the two angles described above may be encoded with respect to fifth vertex E. Accordingly, the position and the shape of corresponding triangle BEC or, in other words, position information of fifth vertex E can be derived from only two angles and a code amount can be reduced as compared to a case where the coordinate value of fifth vertex E is encoded.

As each of the two angles described above, the angle itself may be encoded or an index that identifies one angle among a plurality of angles defined in advance may be encoded. A plurality of combinations of the two angles may be defined in advance. In addition, an index that identifies one combination among the plurality of combinations may be encoded.

Information indicating one angle and a length of one edge may be encoded instead of the two angles described above. For example, an angle formed between edge BC and edge BE and a length of edge BE may be encoded. In addition, information indicating one angle and a length of one perpendicular may be encoded instead of the two angles described above. For example, an angle formed between edge BC and edge BE and a length of a perpendicular drawn from fifth vertex E to edge BC may be encoded.

In addition, information indicating lengths of two edges may be encoded instead of the two angles described above. For example, lengths of edge BE and edge CE may be encoded.

For example, "(3) information indicating a distance between a position of a vertex of a polygon and a position of a processing object vertex and a direction" may indicate a difference vector indicating a distance between fifth vertex E of corresponding triangle BEC and fourth vertex D that is a processing object and a direction.

This information may be omitted when the position of fourth vertex D coincides with the position of fifth vertex E or fourth vertex D is positioned on the same plane as fifth vertex E.

For example, "(4) information indicating a difference between a plane including a polygon and a plane including a polygon including a processing object vertex" may indicate an angle formed between a plane including corresponding triangle BEC and a plane including second triangle BDC. As the angle, for example, an angle formed between edge BE and edge BD or an angle formed between edge CE and edge CD may be encoded.

As the angle formed between edge BE and edge BD or the angle formed between edge CE and edge CD, the angle itself may be encoded or an index that identifies one angle among a plurality of angles defined in advance may be encoded. The plurality of angles defined in advance may be commonly used when deriving the angle formed between edge BC and edge CE and the angle formed between edge BC and edge BE.

In addition, an index indicating a plurality of combinations of the angle formed between edge BE and edge BD, the angle formed between edge CE and edge CD, the angle formed between edge BC and edge CE, and the angle formed between edge BC and edge BE may be defined in advance. Accordingly, a code amount can be further reduced as compared to a case where an angle itself is encoded.

The angle may be omitted when the position of fourth vertex D coincides with the position of fifth vertex E or fourth vertex D is positioned on the same plane as fifth vertex E. In addition, a difference vector may be encoded in addition to an angle when the angle is expressed by an index, when the angle is expressed by integral accuracy, when a coordinate value is expressed by integral accuracy, and the like. Accordingly, the coordinate value of derived fourth vertex D can be corrected and accuracy of encoding can be improved.

Furthermore, fourth vertex D may be used as first vertex A, second vertex B, or third vertex C with respect to other vertexes.

In addition, by selecting a processing method such as an encoding method or a decoding method for each processing object vertex, processing methods may be switched among a plurality of processing methods. In this case, information indicating the processing method used to encode the processing object vertex may be encoded. Alternatively, processing methods may be switched among a plurality of processing methods by selecting a processing method in units of three-dimensional meshes and information indicating a processing method may be encoded in units of three-dimensional meshes.

Accordingly, a processing method in accordance with a property of the three-dimensional mesh may become selectable and an improvement in subjective image quality and a reduction in a code amount may be possible.

In addition, "difference" as described in the present disclosure may be replaced with "deviation", "residual", "delta", or the like. Furthermore, "vertex" as described in the present disclosure may mean a position of a vertex.

Furthermore, the corresponding triangle in the above description may also be expressed as a predicted triangle or a virtual corresponding triangle. Furthermore, fifth vertex E of the corresponding triangle may also be expressed as a corresponding vertex, a corresponding point, a predicted vertex, or a predicted point.

<Second aspect of encoding and decoding of vertex information>

A second aspect of encoding and decoding of vertex information is an aspect that can be combined with the first aspect of encoding and decoding of vertex information.

Regardless of the prediction method used for mesh encoding, an imperfection of an input three-dimensional mesh causes an exception that requires a special handling tool. The exception can exist in various components of a polygon mesh, such as connectivity, a geometry coordinate, or a property attribute. Common defects in a 3D model are a degenerated face, overlapping vertexes, and a disconnected part.

3D graphical data taken by various kinds of real hardware tends to include irregularities, such as a degenerated face, overlapping vertexes, and a disconnected part. The degenerated face occurs when at least two of a plurality of vertexes forming a face have the same vertex index, so that the surface area is 0, and the surface normal is indeterminate.

The overlapping vertexes have exactly the same coordinates but are expressed by two or more different indices. Therefore, the same point is expressed by different indices on different faces. Therefore, in traversing a topology of a mesh, these vertexes are not regarded as being the same, which leads to a failure of the encoding technique that depends on using a previously encoded vertex. In addition, the polygon mesh may include a disconnected part, that is an imperfect part, so that it may be difficult to traverse the entire model.

To address such exceptional cases, a virtual reference triangle that allows implementation of an angle-based 3D graphics encoding technique. The virtual reference triangle may be constructed by using a combination of a previously encoded vertex and a dummy vertex selected according to a predetermined condition. Exception processing for a 3D model may be indicated from encoding device 100 to decoding device 200 using a mode setting parameter.

In the present aspect, when an exception occurs, a new vertex can be encoded by using a virtual reference triangle.

<Example of encoding processing according to second aspect>

FIG. 47 is a flowchart illustrating an example of encoding processing according to the present aspect. First, connection information of a first vertex, a second vertex, and a third vertex is derived from a three-dimensional mesh (S121). Here, the first vertex, the second vertex, and the third vertex form a first triangle.

It is then determined whether or not the derived connection information satisfies a condition (S122). Here, the following two conditions are possible. A first condition is that the first vertex, the second vertex, and the third vertex are connected to each other. A second condition is that the first vertex, the second vertex, and the third vertex have already been encoded. Note that not only facility information but also vertex information may be derived and used for these determinations.

FIG. 48 is a conceptual diagram illustrating an example of a mesh according to the present aspect. A1, B1, C1, D1, E1, and F1 are vertexes in a geometry map.

FIG. 49 is a conceptual diagram illustrating an example of a segmented mesh in which some of three vertexes forming a triangle are disconnected. A2, B2, C2, D2, E2, and F2 are vertexes in a connectivity map. In FIG. 49, the solid lines represent connected, and the dotted lines represent disconnected. Note that if no line is indicated between vertexes, it also means that the vertexes are disconnected. Vertex A1 of triangle A1B1C1 is not suitable for use in encoding of vertex D1, because there is no connectivity between A2 and C2 and between A2 and B2.

Note that that there is no connectivity between two vertexes means that the two vertexes are not connected and may be expressed as the edge between the two vertexes having no connectivity.

FIG. 50 is a conceptual diagram illustrating an example of a mesh with overlapping vertexes, in which vertexes of a reference triangle are not encoded before encoding of a current vertex to be encoded. Vertexes C and F are two different points in the mesh and exist on different faces in the mesh. Vertexes C and F have the same coordinates and therefore are displayed as overlapping points.

First, in an order of traverse, vertexes A, B, and C are encoded. Vertex D is then encoded in an angle method using reference triangle ABC. When then encoding vertex E using reference triangle BDF, vertex F has not been encoded yet.

Furthermore, in order to efficiently represent a three-dimensional image, a virtual vertex or a virtual triangle may be used in the three-dimensional mesh. In such a case, similarly, a vertex may have not been encoded, or there may be no connectivity between vertexes.

In FIG. 47, when it is determined that the derived connection information satisfies the condition (Yes in S122), a first vertex, a second vertex, and a third vertex are derived as three vertexes (S123). Here, the second vertex, the third vertex, and a fourth vertex form a second triangle on the three-dimensional mesh, and the fourth vertex is located on the opposite side to the first vertex.

FIG. 31 illustrates an example of the positions of the three vertexes, B and C are the second vertex and the third vertex, A is the first vertex, and D is the fourth vertex. The reference triangle formed by A, B, and C can be used for encoding vertex D.

In FIG. 47, when it is determined that the derived connection information does not satisfy the condition (No in S122), three vertexes including at least a fifth vertex are derived (S124). The fifth vertex is different from the first vertex, the second vertex, and the third vertex. Note that the fifth vertex in the present aspect is a vertex used as an alternative to any of the first vertex, the second vertex, and the third vertex, and has a different meaning than the fifth vertex in the first aspect.

FIG. 51 is a conceptual diagram illustrating an example of exception processing using a set of vertexes previously encoded. This example is an example in the case where vertex B does not satisfy the condition (vertex B does not exist or has not been encoded yet). The reference triangle formed by B, C, and D cannot be used for encoding of vertex E. Vertex B is replaced with previously encoded vertex A (fifth vertex), and a new virtual reference triangle ACD that can be used for encoding of vertex E is formed.

In another example, the fifth vertex may be created as a dummy vertex having predefined coordinates. The virtual reference triangle may be formed by including the dummy vertex. Encoding device 100 may calculate the dummy vertex. Furthermore, dummy vertexes may be previously defined at fixed coordinates (1, 0, 0), (0, 1, 0), and (0, 0, 1), and these dummy vertexes may serve as the first vertex, the second vertex, and the third vertex.

The coordinates of the dummy vertex may be selected in a method specific to the model. In an example, encoding device 100 may calculate dimensions of a 3D bounding box of an object and create a dummy vertex using those values. The calculated dummy vertex may be signaled in a bitstream. Furthermore, when there are a plurality of vertexes that do not satisfy the condition, the same number of dummy vertexes or previously encoded vertexes as the number of the plurality of vertexes that do not satisfy the condition may be used.

In FIG. 47, a plurality of angles for determining the fourth vertex are derived from the triangle formed by the derived three vertexes (S125). Here, the fourth vertex forms the second triangle together with an edge shared with the triangle formed by the derived three vertexes. The number of the plurality of angles to be derived depends on the prediction method used for encoding of the fourth vertex. FIGS. 31, 32, and 33 illustrate different examples in which at least a plurality of angles are derived using derived three vertexes A, B, and C.

The plurality of angles are encoded into the bitstream (S126). In an example of encoding of the plurality of angles, entropy encoding is used. Examples of an encoding method with which the entropy encoding conforms may include Huffman coding, arithmetic coding, range coding, asymmetric numeral systems (ANS), and context-adaptive binary arithmetic coding (CABAC).

FIG. 52 is a flowchart illustrating a specific example of the encoding processing according to the present aspect. In the flowchart illustrated in FIG. 52, processing of encoding a vertex using an exception (S131) is added, compared with the flowchart illustrated in FIG. 30. This processing (S131) corresponds to processing (S124, S125, S126) illustrated in FIG. 47. That is, the processing of encoding a vertex using an exception is one of encoding modes used for compression of mesh data.

FIG. 53 is a block diagram illustrating a configuration example of encoding device 100 according to the present aspect. Encoding device 100 encodes a three-dimensional mesh into a bitstream. As illustrated in FIG. 53, encoding device 100 may include traverser 161, determiner 167, exception processor 168, angle deriver 163, and entropy encoder 166.

Traverser 161 acquires a three-dimensional mesh. In addition, traverser 161 outputs connection information of a first vertex, a second vertex, and a third vertex derived from the three-dimensional mesh to determiner 167. In addition, traverser 161 determines a fourth vertex to be encoded in the three-dimensional mesh. Here, the first vertex, the second vertex, and the third vertex form a first triangle and share a common edge with a second triangle including the fourth vertex.

Determiner 167 checks whether the connection information satisfies a condition. When it is determined that the coupling information satisfies the condition, angle deriver 163 performs processing using the first vertex, the second vertex, and the third vertex.

When it is determined that the connection information does not satisfy the condition, exception processor 168 derives three vertexes including at least a fifth vertex. Angle deriver 163 performs processing using the three vertexes including at least the fifth vertex.

Angle deriver 163 derives a plurality of angles using the three vertexes and the fourth vertex. In an example where a vertex represents geometry coordinates, three angles are derived. The number of the plurality of angles to be derived depends on the prediction method used for encoding of the fourth vertex.

Entropy encoder 166 encodes the plurality of angles derived by angle deriver 163 into the bitstream.

<Example of decoding processing according to second aspect>

FIG. 54 is a flow chart illustrating an example of decoding processing according to the present aspect. First, connection information of a first vertex, a second vertex, and a third vertex is derived from a bitstream (S221). Here, the first vertex, the second vertex, and the third vertex form a first triangle.

It is then determined whether or not the derived connection information satisfies a condition (S222). A first condition is that the first vertex, the second vertex, and the third vertex are connected to each other. A second condition is that the first vertex, the second vertex, and the third vertex have already been decoded. Note that not only the connection information but also vertex information may be derived and used for these determinations.

FIG. 48 is a conceptual diagram illustrating an example of a mesh according to the present aspect. A1, B1, C1, D1, E1, and F1 are vertexes in a geometry map.

FIG. 49 is a conceptual diagram illustrating an example of a segmented mesh in which some of three vertexes forming a triangle are disconnected. A2, B2, C2, D2, E2, and F2 are vertexes in a connectivity map. In FIG. 49, the solid lines represent connected, and the dotted lines represent disconnected. Note that if no line is indicated between vertexes, it also means that the vertexes are disconnected. Vertex A1 of triangle A1B1C1 is not suitable for use in encoding of vertex D1, because there is no connectivity between A2 and C2 and between A2 and B2.

Note that that there is no connectivity between two vertexes means that the two vertexes are not connected and may be expressed as the edge between the two vertexes having no connectivity.

FIG. 50 is a conceptual diagram illustrating an example of a mesh with overlapping vertexes, in which vertexes of a reference triangle are not decoded before decoding of a current vertex to be decoded. Vertexes C and F are two different points in the mesh and exist on different faces in the mesh. Vertexes C and F have the same coordinates and therefore are displayed as overlapping points.

First, in an order of traverse, vertexes A, B, and C are decoded. Vertex D is then decoded in an angle method using reference triangle ABC. When then decoding vertex E using reference triangle BDF, vertex F has not been decoded yet.

Furthermore, in order to efficiently represent a three-dimensional image, a virtual vertex or a virtual triangle may be used in the three-dimensional mesh. In such a case, similarly, a vertex may have not been decoded, or there may be no connectivity between vertexes.

In FIG. 54, when it is determined that the derived connection information satisfies the condition (Yes in S222), a first vertex, a second vertex, and a third vertex are derived as three vertexes (S223). Here, the second vertex, the third vertex, and a fourth vertex form a second triangle on the three-dimensional mesh, and the fourth vertex is located on the opposite side to the first vertex.

FIG. 31 illustrates an example of the positions of the three vertexes, B and C are the second vertex and the third vertex, A is the first vertex, and D is the fourth vertex.

The reference triangle formed by A, B, and C can be used for decoding vertex D.

In FIG. 54, when it is determined that the derived connection information does not satisfy the condition (No in S222), three vertexes including at least a fifth vertex are derived (S224). The fifth vertex is different from the first vertex, the second vertex, and the third vertex. Note that the fifth vertex in the present aspect is a vertex used as an alternative to any of the first vertex, the second vertex, and the third vertex, and has a different meaning than the fifth vertex in the first aspect.

FIG. 51 is a conceptual diagram illustrating an example of exception processing using a set of vertexes previously decoded. This example is an example in the case where vertex B does not satisfy the condition (vertex B does not exist or has not been decoded yet). The reference triangle formed by B, C, and D cannot be used for decoding of vertex E. Vertex B is replaced with previously decoded vertex A (fifth vertex), and a new virtual reference triangle ACD that can be used for decoding of vertex E is formed.

In another example, the fifth vertex may be created as a dummy vertex having predefined coordinates. The virtual reference triangle may be formed by including the dummy vertex. Decoding device 200 may calculate the dummy vertex, as with encoding device 100. Furthermore, dummy vertexes may be previously defined at fixed coordinates (1, 0, 0), (0, 1, 0), and (0, 0, 1), and these dummy vertexes may serve as the first vertex, the second vertex, and the third vertex.

The coordinates of the dummy vertex may be selected in a method specific to the model. In an example, decoding device 200 may calculate dimensions of a 3D bounding box of an object and create a dummy vertex using those values. Alternatively, the dummy vertex created by encoding device 100 may be signaled in the bitstream and decoded by decoding device 200. Furthermore, when there are a plurality of vertexes that do not satisfy the condition, the same number of dummy vertexes or previously decoded vertexes as the number of the plurality of vertexes that do not satisfy the condition may be used.

In FIG. 54, a plurality of angles are decoded from the bitstream (S225). In an example of decoding of the plurality of angles, entropy decoding is used. Examples of an encoding method with which the entropy decoding conforms may include Huffman coding, arithmetic coding, range coding, asymmetric numeral systems (ANS), and context-adaptive binary arithmetic coding (CABAC). The number of the plurality of angles to be decoded depends on the prediction method used for decoding of the fourth vertex.

The fourth vertex is derived using the plurality of angles (S226). Here, the fourth vertex forms the second triangle together with an edge shared with the triangle formed by the derived three vertexes. FIGS. 31, 32, and 33 illustrate different examples in which the fourth vertex is derived using derived three vertexes A, B, and C and the plurality of angles.

FIG. 55 is a flow chart illustrating a specific example of the decoding processing according to the present aspect. In the flowchart illustrated in FIG. 55, processing of decoding a vertex using an exception (S231) is added, compared with the flowchart illustrated in FIG. 44. This processing (S231) corresponds to processing (S224, S225, S226) illustrated in FIG. 54. That is, the processing of decoding a vertex using an exception is one of decoding modes used for expansion of the bitstream.

FIG. 56 is a block diagram illustrating a configuration example of decoding device 200 according to the present aspect. Decoding device 200 decodes a three-dimensional mesh from a bitstream. As illustrated in FIG. 56, decoding device 200 may include entropy decoder 266, traverser 261, determiner 267, exception processor 268, and coordinate deriver 264.

Entropy decoder 266 acquires a bitstream. In addition, entropy decoder 266 decodes the connection information of the first vertex, the second vertex, and the third vertex and the plurality of angles from the bitstream. Here, the first vertex, the second vertex, and the third vertex form a first triangle.

Traverser 261 outputs the connection information decoded by entropy decoder 266 to determiner 267.

Determiner 267 checks whether the connection information satisfies a condition. When it is determined that the connection information satisfies the condition, coordinate deriver 264 performs processing using the first vertex, the second vertex, and the third vertex.

When it is determined that the connection information does not satisfy the condition, exception processor 268 derives three vertexes including at least the fifth vertex.

Coordinate deriver 264 derives the fourth vertex in the three-dimensional mesh using the three vertexes and the plurality of angles and outputs the fourth vertex. Here, the fourth vertex forms the second triangle together with an edge shared with the triangle formed by the three vertexes.

In the present aspect, when the reference triangle for encoding or decoding of a vertex includes a disconnected edge or a vertex that has not been encoded or decoded yet, a new virtual reference triangle is formed by using a new vertex. In this way, efficient encoding or decoding of a vertex can be performed.

<Supplement to second aspect of encoding and decoding of vertex information>

In the present aspect, as illustrated in FIG. 47 or FIG. 54, whether to perform exception processing is determined based on the result of the determination of whether the information of the reference triangle satisfies a condition. Examples of the condition include the following conditions.

(i) Each edge of the reference triangle has connectivity (see FIG. 49). For example, among the vertexes of the reference triangle, a vertex located at the opposite position to the current vertex to be processed with respect to an edge shared by the triangle including the current vertex to be processed and the reference triangle is connected to another vertex of the reference triangle.

(ii) Each vertex of the reference triangle has already been encoded or decoded.

Note that the conditions (i) and (ii) described above are examples, only one of the conditions may be used for determination, a different condition may be added, or at least one of the conditions may be replaced with another condition. In other words, in a configuration in which selection from among or switching between first processing of processing (encoding or decoding) a vertex using the reference triangle and second processing of processing a current vertex using a triangle different from the reference triangle can be performed, information of the reference triangle may be used as a condition for the selection or switching.

The reference triangle can be defined as a triangle that shares a vertex or an edge with a triangle having a current vertex to be processed. The triangle different from the reference triangle may be a triangle that does not share at least one of a vertex and an edge with a triangle having a current vertex to be processed. Note that both triangles may be a polygon other than the triangle.

For determination of the selection from among or switching between the first processing and the second processing, any or any combination of position information and connection information of a vertex of the reference triangle and information of whether or not a vertex can be used (whether or not a vertex exists or whether or not a vertex has already been encoded or decoded) can be used. Furthermore, information of another triangle or information of a vertex of a triangle having a current vertex to be processed can also be used.

Instead of selecting from among or switching between the first processing and the second processing, processing may be selected from among or switched among a plurality of processing including the first processing and the second processing. That is, the plurality of processing may include different processing than the first processing and the second processing.

Furthermore, although the reference triangle is used in the first processing, and a triangle different from the reference triangle is used in the second processing as described above, the first processing and the second processing are not limited to this. That is, the same triangle may be used in the first processing and the second processing.

For example, the first processing may be processing performed using the reference triangle, and the second processing may be other processing performed using the reference triangle. Alternatively, the first processing may be processing performed using a triangle different from the reference triangle, and the second processing may be other processing performed using a triangle different from the reference triangle.

Furthermore, for example, the first processing may be processing performed using the reference triangle, and the second processing may be processing performed using another triangle at least one edge of which has no connectivity.

Furthermore, in that case, as third processing, processing performed using a further triangle each edge of which has connectivity may be defined. Then, processing may be selected from among or switched among a plurality of processing including the first processing, the second processing, and the third processing.

Furthermore, in that case, selectable exception processing may vary with the determination result for a condition. Examples of the combination of the determination result for a condition and the exception processing include the following combinations.

In an example, concerning the condition (i) described above, when each vertex of the reference triangle has already been processed (encoded or decoded), and any of the edges of the reference triangle has no connectivity, processing may be selected from among a plurality of processing including the first processing and the third processing.

Here, when performing the first processing, the increase of the processing amount may be able to be reduced, since the reference triangle is used regardless of the presence or absence of connectivity. When performing the third processing, a triangle that forms the same object as the object formed by a triangle having the current vertex to be processed may be used, so that the current vertex to be processed may be able to be more efficiently indicated than when performing the first processing.

In another example, concerning the condition (ii) described above, when a vertex of the reference triangle has not been processed (encoded or decoded) yet, the processing may be selected from among a plurality of processing including the second processing and the third processing. In other words, the processing may be performed using a triangle different from the reference triangle, regardless of connectivity. The third processing may be more efficiently performed than the second processing.

In another example, when at least one of the conditions (i) and (ii) described above is not satisfied, the third processing described above may be always selected. In other words, when at least one of the conditions (i) and (ii) is not satisfied, the reference triangle is set to be unavailable, and the processing may be performed using another triangle each vertex of which has been processed and each edge of which has connectivity. This arrangement may allow the processing to be more efficiently performed.

Note that the position information of a vertex in the present disclosure is not limited to geometry coordinate information and may be other position information than geometry.

For example, when an exception occurs, a vertex that cannot be used for encoding or decoding is replaced with a vertex that has been already been encoded or decoded. Examples of the vertex that has already been encoded or decoded include the last three vertexes of a part that has been encoded or decoded in the mesh.

One or more additional vertexes may be used for forming a new reference triangle. An index that indicates which vertexes are to be used for forming the reference triangle may be signaled from encoding device 100 to decoding device 200. Such signaling may be used not only in the case of an exception but also in the case of no exception. Furthermore, such signaling may be used not only in the "angle" prediction mode but also in other prediction modes that uses a reference triangle, such as a parallelogram prediction mode.

For example, when an exception occurs, a dummy reference triangle is generated using predefined vertexes. The predefined vertexes may be (1, 0, 0), (0, 1, 0), and (0, 0, 1). Then, a new reference triangle may be created using the predefined vertexes. Then, the new reference triangle may be used for processing of a vertex.

FIG. 57 is a flowchart illustrating an example of the exception processing according to the present aspect. For example, vertexes of a reference triangle are set by using predefined values (S301). A vertex of a new triangle is then encoded or decoded using the reference triangle.

FIG. 58 is a flowchart illustrating another example of the encoding processing according to the present aspect. First, encoding device 100 derives coordinates of a fourth vertex to be encoded from a mesh (S151). Here, the triangle having the fourth vertex is defined as a second triangle, and a triangle that shares an edge with the second triangle is defined as a reference triangle.

Encoding device 100 derives connection information of the reference triangle from the mesh (S152). In the subsequent steps, encoding device 100 determines whether or not the connection information of the reference triangle satisfies a condition, and performs encoding processing of vertex coordinates based on the determination result. Here, the following two determination processing will be shown, for example.

    (i) Whether or not each edge of the reference triangle has connectivity (S153). For example, whether the vertexes at the opposite ends of the edge shared by the reference triangle and the second triangle are connected to the remaining vertex of the reference triangle.

    (ii) Whether each vertex of the reference triangle has already been encoded (S154).

When the result of at least any of the determinations (i) and (ii) described above is negative (No in S153 or No in S154), encoding device 100 encodes information for determining the coordinates of the fourth vertex according to the exception processing illustrated in the present disclosure (S155, S156). On the other hand, when both the conditions (i) and (ii) are satisfied (Yes in S153 and Yes in S154), encoding device 100 encodes information for determining the coordinates of the fourth vertex based on the reference triangle. Here, an example in which angle information is used for encoding is shown (S156).

Note that the exception processing in the case where the condition (i) is not satisfied and the exception processing in the case where the condition (ii) is not satisfied may be different processing. Furthermore, not only the connection information but also vertex information may be derived and used for the determinations.

FIG. 59 is a flowchart illustrating another example of the decoding processing according to the present aspect. First, decoding device 200 acquires, from a bitstream, information for determining the coordinates of a fourth vertex to be decoded. In the drawing, decoding of angle information is shown as an example (S251). Here, the triangle having the fourth vertex is defined as a second triangle, and a triangle that shares an edge with the second triangle is defined as a reference triangle.

Decoding device 200 derives connection information of the reference triangle from the bitstream (S252). In the subsequent steps, decoding device 200 determines whether or not the connection information of the reference triangle satisfies a condition, and performs decoding processing of vertex coordinates based on the determination result. Herein, the following two determination processing will be shown, for example.

(i) Whether or not each edge of the reference triangle has connectivity (S253). For example, whether the vertexes at the opposite ends of the edge shared by the reference triangle and the second triangle are connected to the remaining vertex of the reference triangle.
(ii) Whether each vertex of the reference triangle has already been decoded (S254).

When the result of at least any of the determinations (i) and (ii) described above is negative (No in S253 or No in S254), decoding device 200 derives (decodes) the coordinates of the fourth vertex according to the exception processing illustrated in the present disclosure (S255, S256). On the other hand, when both the conditions (i) and (ii) are satisfied (Yes in S253 and Yes in S254), decoding device 200 derives (decodes) the coordinates of the fourth vertex based on the reference triangle. Here, an example in which angle information is used for derivation (decoding) is shown (S256).

Note that the exception processing in the case where the condition (i) is not satisfied and the exception processing in the case where the condition (ii) is not satisfied may be different processing. Furthermore, not only the connection information but also vertex information may be derived and used for the determinations.

FIG. 60 is a conceptual diagram illustrating an example of the position of a parameter in a bitstream. As illustrated in FIG. 60, information for the exception processing may be signaled as a parameter in a bitstream.

FIG. 61 is a conceptual diagram illustrating another example of the position of a parameter in a bitstream. As illustrated in FIG. 61, information for the exception processing may be signaled as a parameter in a header of a bitstream.

Furthermore, a parameter may be used to indicate the method of exception processing. In an example, the parameter is an index having a value of 0 or 1. The value can indicate whether a predefined dummy vertex is used or a signaled dummy vertex is used. When using a signaled dummy vertex, the dummy vertex is also signaled after the parameter.

<Representative examples>

FIG. 62 is a flowchart illustrating an example of basic encoding processing according to the present embodiment. For example, in an operation, circuit 151 of encoding device 100 illustrated in FIG. 24 performs the encoding processing illustrated in FIG. 62.

Specifically, when a first triangle satisfies a condition (Yes in S161), circuit 151 selects a mode for encoding a current vertex to be encoded of a second triangle from among a first set of modes including a normal mode that uses the first triangle to encode the current vertex (S162). On the other hand, when the first triangle does not satisfy the condition (No in S161), circuit 151 selects the mode from among a second set of modes including an exception mode that uses a third triangle different from the first triangle and the second triangle to encode the current vertex to be encoded (S163).

Circuit 151 then encodes the current vertex to be encoded according to the mode (S164).

According to this, when the first triangle does not satisfy the condition, it may be possible to use the third triangle different from the first triangle to encode the vertexes of the second triangle. Therefore, it may be possible to encode the vertexes of the second triangle by using a reference triangle suitable for the encoding.

For example, the third triangle may be a triangle that shares an edge with the first triangle. In this case, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Furthermore, for example, the third triangle may be a triangle that shares an edge with the second triangle.

In this case, it may be possible to use a third triangle near the second triangle in the exception mode. Therefore, it may be possible to efficiently encode the current vertex to be encoded by using a third triangle near the current vertex to be encoded.

Furthermore, for example, the third triangle may be a triangle that shares a vertex with the first triangle. In this case, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Furthermore, for example, the third triangle may be a triangle each vertex of which has been encoded. In this case, it may be possible to use a third triangle that reflects a characteristic of a three-dimensional mesh to encode the current vertex to be encoded. Therefore, it may be possible to efficiently encode the current vertex to be encoded.

Furthermore, for example, the third triangle may be a triangle each edge of which has connectivity. In this case, it may be possible to use a third triangle that reflects a characteristic of a three-dimensional mesh to encode the current vertex to be encoded. Therefore, it may be possible to efficiently encode the current vertex to be encoded.

Furthermore, for example, the third triangle may be a triangle that has a dummy vertex. In this case, it may be possible to encode the current vertex to be encoded by using a third triangle having an arbitrary vertex. Therefore, it may be possible to flexibly encode the current vertex to be encoded.

Furthermore, for example, the exception mode may include a plurality of sub-modes. When selecting the exception mode as the mode for encoding a current vertex to be encoded, circuit 151 may selects a sub-mode for encoding the current vertex from among the plurality of sub-modes. In this case, it may be possible to encode, in the exception mode, the current vertex to be encoded according to the sub-mode selected from among the plurality of sub-modes. Therefore, it may be possible to encode the current vertex to be encoded according to an exception processing method adaptively selected from among a plurality of exception processing methods.

Furthermore, for example, circuit 151 may encode a parameter indicating a sub-mode. In this case, it may be possible for encoding device 100 and decoding device 200 to share information of the sub-mode for encoding the current vertex to be encoded according to the parameter. Therefore, it may be possible to apply the same sub-mode to the encoding and the decoding according to the parameter.

Furthermore, for example, circuit 151 may determine a third triangle according to a sub-mode. In this case, selecting a sub-mode from among a plurality of sub-modes may make it possible to select a third triangle suitable for encoding. Therefore, it may be possible to efficiently encode the current vertex to be encoded by using a third triangle suitable for the encoding.

Furthermore, for example, circuit 151 may determine a vertex of a third triangle according to a sub-mode. In this case, selecting a sub-mode from among a plurality of sub-modes may make it possible to select vertexes of a third triangle suitable for encoding. Therefore, it may be possible to efficiently encode the current vertex to be encoded by using a third triangle suitable for the encoding.

Furthermore, for example, the condition may include that each vertex of the first triangle has been encoded. In this case, it may be possible to prevent a first triangle having a vertex that has not been encoded from being used for encoding the vertexes of the second triangle. In addition, it may be possible to use a mode suitable for the encoding of the vertexes of the second triangle.

Furthermore, for example, the condition may include that each edge of the first triangle has connectivity. In this case, it may be possible to prevent a first triangle having an edge that has no connectivity from being used for encoding the vertexes of the second triangle. In addition, it may be possible to use a mode suitable for the encoding of the vertexes of the second triangle.

Furthermore, for example, when encoding the current vertex to be encoded according to the exception mode, circuit 151 may encode an angle indicating the current vertex using the third triangle.

In this case, it may be possible to prevent the code amount from being excessively high. That is, it may be possible to reduce the worst-case code amount.

Furthermore, for example, the first triangle and the second triangle may share an edge. Furthermore, the edge shared by the first triangle and the second triangle may correspond to the opposite edge to the current vertex to be encoded of the second triangle.

Furthermore, for example, the third triangle may have edges shared with the first triangle and the second triangle. That is, the first triangle, the second triangle, and the third triangle may share edges. In this case, the third triangle shares an edge with the first triangle, shares an edge with the second triangle, shares vertexes with the first triangle, and shares vertexes with the second triangle. However, the third triangle is not limited to such a triangle, and may have any edge or any vertex of the first triangle, for example.

Furthermore, for example, the normal mode may be a mode for encoding the current vertex to be encoded using the first triangle and one or more angles. The exception mode may be a mode for encoding the current vertex to be encoded using the third triangle and one or more angles.

Furthermore, for example, the first set of modes and the second set of modes are different. Specifically, the normal mode need not be included in the second set of modes and may be included only in the first set of modes. Furthermore, the exception mode need not be included in the first set of modes and may be included only in the second set of modes.

Furthermore, for example, the first set of modes may include at least one of a mode for encoding the current vertex to be encoded using coordinates, a mode for encoding the current vertex to be encoded using a parallelogram, and a mode for encoding the current vertex to be encoded using a polynomial. Here, the parallelogram may be based on the first triangle. In addition, the normal mode may be a mode for encoding the current vertex to be encoded using a parallelogram based on the first triangle.

Furthermore, for example, the second set of modes may include at least one of a mode for encoding the current vertex to be encoded using coordinates, a mode for encoding the current vertex to be encoded using a parallelogram, and a mode for encoding the current vertex to be encoded using a polynomial. Here, the parallelogram may be based on the third triangle. In addition, the exception mode may be a mode for encoding the current vertex to be encoded using a parallelogram based on the third triangle.

Furthermore, for example, the first set of modes may include only the normal mode. Furthermore, when the first triangle satisfies the condition, circuit 151 may select the normal mode. That is, when the first triangle satisfies the condition, circuit 151 may encode the current vertex to be encoded according to the normal mode.

Furthermore, for example, the second set of modes may include only the exception mode. Furthermore, when the first triangle does not satisfy the condition, circuit 151 may select the exception mode. That is, when the first triangle does not satisfy the condition, circuit 151 may encode the current vertex to be encoded according to the exception mode.

Furthermore, for example, circuit 151 may select the mode for encoding the current vertex to be encoded from among a set of modes including the normal mode and the exception mode. In this case, the set of modes can correspond to both the first set of modes and the second set of modes. When the first triangle satisfies the condition, circuit 151 may select the normal mode and encode the current vertex to be encoded according to the normal mode. When the first triangle does not satisfy the condition, circuit 151 may select the exception mode and encode the current vertex to be encoded according to the exception mode.

Furthermore, for example, the plurality of sub-modes may include a sub-mode for encoding the current vertex to be encoded using a third triangle having a dummy vertex. The plurality of sub-modes may include a sub-mode for encoding the current vertex to be encoded using a third triangle each vertex of which has been encoded. The plurality of sub-modes may include a sub-mode for encoding the current vertex to be encoded using a third triangle each edge of which has connectivity. The sub-mode may correspond to a condition concerning the third triangle or correspond to a condition concerning the vertexes of the third triangle.

That is, the sub-mode may correspond to the selection method for the third triangle or the vertexes of the third triangle.

Furthermore, for example, the normal mode may include a plurality of sub-modes. When the normal mode is selected as the mode for encoding the current vertex to be encoded, circuit 151 may select a sub-mode for encoding the current vertex to be encoded from among the plurality of sub-modes. Circuit 151 may determine the first triangle or the vertexes of the first triangle according to the sub-mode. That is, the sub-mode may correspond to the selection method for the first triangle or the vertexes of the first triangle.

Furthermore, for example, the sub-mode included in the exception mode may be expressed as an exception sub-mode. In addition, the sub-mode included in the normal mode may be expressed as a normal sub-mode.

Furthermore, for example, the mode may be expressed as processing. In addition, the normal mode, the exception mode, and the sub-mode may be expressed as normal processing, exception processing, and sub-processing, respectively.

Furthermore, for example, circuit 151 may encode the current vertex to be encoded by entropy encoding. Specifically, circuit 151 may encode an angle indicating the current vertex to be encoded by entropy encoding. Furthermore, for example, circuit 151 may encode one, two, or three angles for determining the current vertex to be encoded.

Furthermore, for example, the first triangle may be a reference triangle that is determined as a triangle close to the current vertex to be encoded according to a reference rule.

Furthermore, for example, each vertex described above may be expressed by geometry coordinates in the three-dimensional mesh.

FIG. 63 is a flowchart illustrating an example of basic decoding processing according to the present embodiment. For example, in an operation, circuit 251 of decoding device 200 illustrated in FIG. 25 performs the decoding processing illustrated in FIG. 63.

Specifically, when a first triangle satisfies a condition (Yes in S261), circuit 251 selects a mode for decoding a current vertex to be decoded of a second triangle from among a first set of modes including a normal mode that uses the first triangle to decode the current vertex (S262). On the other hand, when the first triangle does not satisfy the condition (No in S261), circuit 251 selects the mode from among a second set of modes including an exception mode that uses a third triangle different from the first triangle and the second triangle to decode the current vertex to be decoded (S263).

Circuit 251 decodes the current vertex to be decoded according to the mode (S264).

According to this, when the first triangle does not satisfy the condition, it may be possible to use the third triangle different from the first triangle to decode the vertexes of the second triangle. Therefore, it may be possible to decode the vertexes of the second triangle by using a reference triangle suitable for the decoding.

For example, the third triangle may be a triangle that shares an edge with the first triangle. In this case, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Furthermore, for example, the third triangle may be a triangle that shares an edge with the second triangle. In this case, it may be possible to use a third triangle near the second triangle in the exception mode. Therefore, it may be possible to efficiently decode the current vertex to be decoded by using a third triangle near the current vertex to be decoded.

Furthermore, for example, the third triangle may be a triangle that shares a vertex with the first triangle. In this case, it may be possible to use, in the exception mode, a third triangle near the first triangle used in the normal mode. Therefore, it may be possible to reduce the difference between the normal mode and the exception mode. Therefore, it may be possible to reduce the variations of the code amount.

Furthermore, for example, the third triangle may be a triangle each vertex of which has been decoded. In this case, it may be possible to use a third triangle that reflects a characteristic of a three-dimensional mesh to decode the current vertex to be decoded. Therefore, it may be possible to efficiently decode the current vertex to be decoded.

Furthermore, for example, the third triangle may be a triangle each edge of which has connectivity. In this case, it may be possible to use a third triangle that reflects a characteristic of a three-dimensional mesh to decode the current vertex to be decoded. Therefore, it may be possible to efficiently decode the current vertex to be decoded.

Furthermore, for example, the third triangle may be a triangle that has a dummy vertex. In this case, it may be possible to decode the current vertex to be decoded by using a third triangle having an arbitrary vertex. Therefore, it may be possible to flexibly decode the current vertex to be decoded.

Furthermore, for example, the exception mode may include a plurality of sub-modes. When selecting the exception mode as the mode for decoding a current vertex to be decoded, circuit 251 may selects a sub-mode for decoding the current vertex from among the plurality of sub-modes. In this case, it may be possible to decode, in the exception mode, the current vertex to be decoded according to the sub-mode selected from among the plurality of sub-modes. Therefore, it may be possible to decode the current vertex to be decoded according to an exception processing method adaptively selected from among a plurality of exception processing methods.

Furthermore, for example, circuit 251 may decode a parameter indicating a sub-mode. In this case, it may be possible for encoding device 100 and decoding device 200 to share information of the sub-mode for decoding the current vertex to be decoded according to the parameter. Therefore, it may be possible to apply the same sub-mode to the encoding and the decoding according to the parameter.

Furthermore, for example, circuit 251 may determine a third triangle according to a sub-mode. In this case, selecting a sub-mode from among a plurality of sub-modes may make it possible to select a third triangle suitable for decoding. Therefore, it may be possible to efficiently decode the current vertex to be decoded by using a third triangle suitable for the decoding.

Furthermore, for example, circuit 251 may determine a vertex of a third triangle according to a sub-mode. In this case, selecting a sub-mode from among a plurality of sub-modes may make it possible to select vertexes of a third triangle suitable for decoding. Therefore, it may be possible to efficiently decode the current vertex to be decoded by using a third triangle suitable for the decoding.

Furthermore, for example, the condition may include that each vertex of the first triangle has been decoded. In this case, it may be possible to prevent a first triangle having a vertex that has not been decoded from being used for decoding the vertexes of the second triangle. In addition, it may be possible to use a mode suitable for the decoding of the vertexes of the second triangle.

Furthermore, for example, the condition may include that each edge of the first triangle has connectivity. In this case, it may be possible to prevent a first triangle having an edge that has no connectivity from being used for decoding the vertexes of the second triangle. In addition, it may be possible to use a mode suitable for the decoding of the vertexes of the second triangle.

Furthermore, for example, when decoding the current vertex to be decoded according to the exception mode, circuit 251 may decode an angle indicating the current vertex using the third triangle. In this case, it may be possible to prevent the code amount from being excessively high. That is, it may be possible to reduce the worst-case code amount.

Furthermore, for example, the first triangle and the second triangle may share an edge. Furthermore, the edge shared by the first triangle and the second triangle may correspond to the opposite edge to the current vertex to be decoded of the second triangle.

Furthermore, for example, the third triangle may have edges shared with the first triangle and the second triangle. That is, the first triangle, the second triangle, and the third triangle may share edges. In this case, the third triangle shares an edge with the first triangle, shares an edge with the second triangle, shares vertexes with the first triangle, and shares vertexes with the second triangle. However, the third triangle is not limited to such a triangle, and may have any edge or any vertex of the first triangle, for example.

Furthermore, for example, the normal mode may be a mode for decoding the current vertex to be decoded using the first triangle and one or more angles. The exception mode may be a mode for decoding the current vertex to be decoded using the third triangle and one or more angles.

Furthermore, for example, the first set of modes and the second set of modes are different. Specifically, the normal mode need not be included in the second set of modes and may be included only in the first set of modes. Furthermore, the exception mode need not be included in the first set of modes and may be included only in the second set of modes.

Furthermore, for example, the first set of modes may include at least one of a mode for decoding the current vertex to be decoded using coordinates, a mode for decoding the current vertex to be decoded using a parallelogram, and a mode for decoding the current vertex to be decoded using a polynomial. Here, the parallelogram may be based on the first triangle. In addition, the normal mode may be a mode for decoding the current vertex to be decoded using a parallelogram based on the first triangle.

Furthermore, for example, the second set of modes may include at least one of a mode for decoding the current vertex to be decoded using coordinates, a mode for decoding the current vertex to be decoded using a parallelogram, and a mode for decoding the current vertex to be decoded using a polynomial. Here, the parallelogram may be based on the third triangle. In addition, the exception mode may be a mode for decoding the current vertex to be decoded using a parallelogram based on the third triangle.

Furthermore, for example, the first set of modes may include only the normal mode. Furthermore, when the first triangle satisfies the condition, circuit 251 may select the normal mode. That is, when the first triangle satisfies the condition, circuit 251 may decode the current vertex to be decoded according to the normal mode.

Furthermore, for example, the second set of modes may include only the exception mode. Furthermore, when the first triangle does not satisfy the condition, circuit 251 may select the exception mode. That is, when the first triangle does not satisfy the condition, circuit 251 may decode the current vertex to be decoded according to the exception mode.

Furthermore, for example, circuit 251 may select the mode for decoding the current vertex to be decoded from among a set of modes including the normal mode and the exception mode. In this case, the set of modes can correspond to both the first set of modes and the second set of modes. When the first triangle satisfies the condition, circuit 251 may select the normal mode and decode the current vertex to be decoded according to the normal mode. When the first triangle does not satisfy the condition, circuit 251 may select the exception mode and decode the current vertex to be decoded according to the exception mode.

Furthermore, for example, the plurality of sub-modes may include a sub-mode for decoding the current vertex to be decoded using a third triangle having a dummy vertex. The plurality of sub-modes may include a sub-mode for decoding the current vertex to be decoded using a third triangle each vertex of which has been decoded. The plurality of sub-modes may include a sub-mode for decoding the current vertex to be decoded using a third triangle each edge of which has connectivity. The sub-mode may correspond to a condition concerning the third triangle or correspond to a condition concerning the vertexes of the third triangle.

That is, the sub-mode may correspond to the selection method for the third triangle or the vertexes of the third triangle.

Furthermore, for example, the normal mode may include a plurality of sub-modes. When the normal mode is selected as the mode for decoding the current vertex to be decoded, circuit 251 may select a sub-mode for decoding the current vertex to be decoded from among the plurality of sub-modes. Circuit 251 may determine the first triangle or the vertexes of the first triangle according to the sub-mode. That is, the sub-mode may correspond to the selection method for the first triangle or the vertexes of the first triangle.

Furthermore, for example, the sub-mode included in the exception mode may be expressed as an exception sub-mode. In addition, the sub-mode included in the normal mode may be expressed as a normal sub-mode.

Furthermore, for example, the mode may be expressed as processing. In addition, the normal mode, the exception mode, and the sub-mode may be expressed as normal processing, exception processing, and sub-processing, respectively.

Furthermore, for example, circuit 251 may decode the current vertex to be decoded by entropy decoding. Specifically, circuit 251 may decode an angle indicating the current vertex to be decoded by entropy decoding. Furthermore, for example, circuit 251 may decode one, two, or three angles for determining the current vertex to be decoded.

Furthermore, for example, the first triangle may be a reference triangle that is determined as a triangle close to the current vertex to be decoded according to a reference rule.

Furthermore, for example, each vertex described above may be expressed by geometry coordinates in the three-dimensional mesh.

FIG. 64 is a block diagram illustrating another configuration example of encoding device 100 according to the present embodiment. In this example, encoding device 100 includes selector 171 and encoding processor 172.

Selector 171 is an electric circuit, for example. Selector 171 may correspond to traverser 161, determiner 167, exception processor 168, and the like described above, or may be implemented by circuit 151 and memory 152 described above.

Encoding processor 172 is an electric circuit, for example. Encoding processor 172 may correspond to angle deriver 163, entropy encoder 166, and the like described above, or may be implemented by circuit 151 and memory 152 described above.

For example, selector 171 selects a mode from among a first set of modes including a normal mode when a first triangle satisfies a condition, and selects a mode from among a second set of modes including an exception mode when the first triangle does not satisfy the condition. Encoding processor 172 then encodes the current vertex to be encoded according to the mode.

According to this, when the first triangle does not satisfy the condition, it may be possible to use a third triangle different from the first triangle to encode the vertexes of a second triangle. Therefore, it may be possible to encode the vertexes of the second triangle by using a reference triangle suitable for the encoding.

FIG. 65 is a block diagram illustrating another configuration example of decoding device 200 according to the present embodiment. In this example, decoding device 200 includes selector 271 and decoding processor 272.

Selector 271 is an electric circuit, for example. Selector 271 may correspond to traverser 261, determiner 267, exception processor 268, and the like described above, or may be implemented by circuit 251 and memory 252 described above.

Decoding processor 272 is an electric circuit, for example. Decoding processor 272 may correspond to coordinate deriver 264, entropy decoder 266, and the like described above, or may be implemented by circuit 251 and memory 252 described above.

For example, selector 271 selects a mode from among a first set of modes including a normal mode when a first triangle satisfies a condition, and selects a mode from among a second set of modes including an exception mode when the first triangle does not satisfy the condition. Decoding processor 272 then decodes the current vertex to be decoded according to the mode.

According to this, when the first triangle does not satisfy the condition, it may be possible to use a third triangle different from the first triangle to decode the vertexes of a second triangle. Therefore, it may be possible to decode the vertexes of the second triangle by using a reference triangle suitable for the decoding.

<Other examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Furthermore, it is possible to apply the encoding and the decoding in the present disclosure to encoding and decoding of vertex information indicating a position of a vertex. It should be noted that the application of the encoding and the decoding in the present disclosure is not limited to a vertex of a face in a three-dimensional mesh, and the encoding and the decoding in the present disclosure may be applied to encoding and decoding of vertex information indicating a different vertex. In addition, each of the processes in the present disclosure may be performed as one of selectable processes.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

[Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

[Reference Signs List]

    100 encoding device
    101, 121, 144 vertex information encoder

102, 145 connection information encoder
103, 122 attribute information encoder
104, 204 preprocessor
105, 205 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
161, 261 traverser
162, 262 switch
163 angle deriver
164 angle encoder
165 coordinate encoder
166 entropy encoder
167, 267 determiner
168, 268 exception processor
171, 271 selector
172 encoding processor
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
263 angle decoder
264 coordinate deriver
265 coordinate decoder
266 entropy decoder
272 decoding processor
300 network
310 external connector

**Claims**

1. An encoding device comprising:

   memory; and
   a circuit accessible to the memory,
   wherein in operation, the circuit:

      when a first triangle satisfies a condition, selects a mode for encoding a current vertex to be encoded of a second triangle from among a first set of modes including a normal mode that uses the first triangle to encode the current vertex;
      when the first triangle does not satisfy the condition, selects the mode from among a second set of modes including an exception mode that uses a third triangle different from the first triangle and the second triangle to encode the current vertex; and
      encodes the current vertex according to the mode selected.

2. The encoding device according to claim 1, wherein the third triangle shares an edge with the first triangle.

3. The encoding device according to claim 1 or 2, wherein
   the third triangle shares an edge with the second triangle.

4. The encoding device according to claim 1 or 2, wherein
   the third triangle shares a vertex with the first triangle.

5. The encoding device according to claim 1 or 2, wherein
   each vertex of the third triangle has been encoded.

6. The encoding device according to claim 1 or 2, wherein
   each edge of the third triangle has connectivity.

7. The encoding device according to claim 1 or 2, wherein
   the third triangle has a dummy vertex.

8. The encoding device according to claim 1 or 2, wherein

   the exception mode includes sub-modes, and when selecting the exception mode as the mode for encoding the current vertex, the circuit further selects a sub-mode for encoding the current vertex from among the sub-modes.

9. The encoding device according to claim 8, wherein

the circuit encodes a parameter indicating the sub-mode selected.

10. The encoding device according to claim 8, wherein the circuit determines the third triangle according to the sub-mode selected.

11. The encoding device according to claim 8, wherein the circuit determines a vertex of the third triangle according to the sub-mode selected.

12. The encoding device according to claim 1 or 2, wherein
the condition includes that each vertex of the first triangle has been encoded.

13. The encoding device according to claim 1 or 2, wherein
the condition includes that each edge of the first triangle has connectivity.

14. The encoding device according to claim 1 or 2, wherein
when encoding the current vertex according to the exception mode, the circuit encodes an angle indicating the current vertex using the third triangle.

15. A decoding device comprising:

memory; and
a circuit accessible to the memory,
wherein in operation, the circuit:

when a first triangle satisfies a condition, selects a mode for decoding a current vertex to be decoded of a second triangle from among a first set of modes including a normal mode that uses the first triangle to decode the current vertex;
when the first triangle does not satisfy the condition, selects the mode from among a second set of modes including an exception mode that uses a third triangle different from the first triangle and the second triangle to decode the current vertex; and
decodes the current vertex according to the mode selected.

16. The decoding device according to claim 15, wherein the third triangle shares an edge with the first triangle.

17. The decoding device according to claim 15 or 16, wherein
the third triangle shares an edge with the second triangle.

18. The decoding device according to claim 15 or 16, wherein
the third triangle shares a vertex with the first triangle.

19. The decoding device according to claim 15 or 16, wherein
each vertex of the third triangle has been decoded.

20. The decoding device according to claim 15 or 16, wherein
each edge of the third triangle has connectivity.

21. The decoding device according to claim 15 or 16, wherein
the third triangle has a dummy vertex.

22. The decoding device according to claim 15 or 16, wherein

the exception mode includes sub-modes, and when selecting the exception mode as the mode for decoding the current vertex, the circuit further selects a sub-mode for decoding the current vertex from among the sub-modes.

23. The decoding device according to claim 22, wherein the circuit decodes a parameter indicating the sub-mode selected.

24. The decoding device according to claim 22, wherein the circuit determines the third triangle according to the sub-mode selected.

25. The decoding device according to claim 22, wherein the circuit determines a vertex of the third triangle according to the sub-mode selected.

26. The decoding device according to claim 15 or 16, wherein
the condition includes that each vertex of the first triangle has been decoded.

27. The decoding device according to claim 15 or 16, wherein
the condition includes that each edge of the first triangle has connectivity.

28. The decoding device according to claim 15 or 16, wherein
when decoding the current vertex according to the exception mode, the circuit decodes an angle indicating the current vertex using the third triangle.

29. An encoding method comprising:

when a first triangle satisfies a condition, selecting a mode for encoding a current vertex to be encoded of a second triangle from among a first set of modes including a normal mode that uses the first triangle to encode the current vertex; when the first triangle does not satisfy the condition, selecting the mode from among a second set of modes including an exception mode that uses a third triangle different from the first triangle and the second triangle to encode the current vertex; and encoding the current vertex according to the mode selected.

**30.** A decoding method comprising:

when a first triangle satisfies a condition, selecting a mode for decoding a current vertex to be decoded of a second triangle from among a first set of modes including a normal mode that uses the first triangle to decode the current vertex; when the first triangle does not satisfy the condition, selecting the mode from among a second set of modes including an exception mode that uses a third triangle different from the first triangle and the second triangle to decode the current vertex; and decoding the current vertex according to the mode selected.

FIG. 1

Three-dimensional mesh

# FIG. 2

Attribute
information

Vertex information

Connection information

Attribute
information

# FIG. 3

Three-dimensional mesh

Mapping
information

Two-dimensional image

# FIG. 4

Three-dimensional mesh → [Encoding device 100] → Bitstream → (300) → Bitstream → [Decoding device 200] → Three-dimensional mesh

FIG. 5

100

Encoding device

Three-dimensional mesh

101

Vertex information encoder

102

Connection information encoder

103

Attribute information encoder

Bitstream

## FIG. 6

EP 4 538 977 A1

# FIG. 7

FIG. 8

FIG. 9

| Bitstream | | |
|---|---|---|
| Vertex information | Connection information | Attribute information |

FIG. 10

| Bitstream | | |
|---|---|---|
| File | File | File |
| Vertex information | Connection information | Attribute information |

FIG. 11

Bitstream

| Sub-bitstream | Sub-bitstream | Sub-bitstream |
|---|---|---|
| Vertex information | Connection information | Attribute information |

# FIG. 12

FIG. 13

FIG. 14

| | Position information | Attribute information |
|---|---|---|
| n = 1 | $G(1) = (x_1, y_1, z_1)$ | $A(1) = (R_1, G_1, B_1)$ |
| n = 2 | $G(2) = (x_2, y_2, z_2)$ | $A(2) = (R_2, G_2, B_2)$ |
| $\vdots$ | $\vdots$ | $\vdots$ |
| n = N | $G(N) = (x_N, y_N, z_N)$ | $A(N) = (R_N, G_N, B_N)$ |

# FIG. 15

# FIG. 16

|  | Position information | Attribute information |
|---|---|---|
| n = 1 | $G(1) = (x_1, y_1, z_1)$ | $A1(1) = (R_1, G_1, B_1)$ |
| n = 2 | $G(2) = (x_2, y_2, z_2)$ | $A1(2) = (R_2, G_2, B_2)$ |
| ⋮ | ⋮ | ⋮ |
| n = N | $G(N) = (x_N, y_N, z_N)$ | $A1(N) = (R_N, G_N, B_N)$ |

Vertex information

| m = 1 | $A2(1) = (U_1, V_1)$ |
|---|---|
| ⋮ | ⋮ |
| m = M | $A2(M) = (U_M, V_M)$ |

Attribute information

| k = 1 | n[1, 3, 4] | m[2, 4, 6] |
|---|---|---|
| ⋮ | ⋮ | ⋮ |
| k = K | n[1, N-1, N] | m[10, 20, M] |

Connection information

FIG. 17

## FIG. 18

EP 4 538 977 A1

## FIG. 19

## FIG. 20

## FIG. 21

## FIG. 22

## FIG. 23

Three-dimensional data decoder 213

Two-dimensional data decoder 241
- Texture decoder 243

Mesh data decoder 242
- Vertex information decoder 244
- Connection information decoder 245

Mesh reconstructor 246

Presenter 247

Description decoder 248

Bitstream
- Texture file
- Mesh file
- Description file

# FIG. 24

100

Encoding device

151

Circuit

152

Memory

# FIG. 25

200

Decoding device

251

Circuit

252

Memory

## FIG. 26

## FIG. 27

# FIG. 28

```
        ┌─────────┐
        │  Start  │
        └─────────┘
             │
             ▼              ╱ S101
┌──────────────────────────────────────┐
│ Derive first vertex, second vertex,  │
│ and third vertex from three-         │
│ dimensional mesh                     │
└──────────────────────────────────────┘
             │
             ▼              ╱ S102
┌──────────────────────────────────────┐
│ Derive first angle, second angle,    │
│ and third angle for deriving fourth  │
│ vertex                               │
└──────────────────────────────────────┘
             │
             ▼              ╱ S103
┌──────────────────────────────────────┐
│ Encode first angle, second angle,    │
│ and third angle into bitstream       │
└──────────────────────────────────────┘
             │
             ▼
        ┌─────────┐
        │   End   │
        └─────────┘
```

# FIG. 29

```
                    ( Start )
                        │
                        ▼           ╭S111
        ┌───────────────────────────────────┐
        │      Encode vertex of first face   │
        └───────────────────────────────────┘
                        │
        ┌──────────────►├◄──────────────────────────────┐
        │               ▼           ╭S112                │
        │  ┌─────────────────────────────────────────┐   │
        │  │ Traverse to next face and write traversal symbol │
        │  └─────────────────────────────────────────┘   │
        │               │                                │
        │               ▼           ╭S113                │
        │      Yes   ◇ Vertexes encoded? ◇               │
        └──────────────            │                     │
                                   │ No                  │
                                   ▼       ╭S114          │
          Coordinates  ◇ Traversal symbol? ◇  Angle      │
        ┌──────────────            │      └──────────┐    │
  S115  ▼                          │            S116  ▼   │
  ┌──────────────┐                 │        ┌──────────────┐
  │ Encode vertex│                 │        │ Encode vertex│
  │ using coordinates│             │        │ using angle  │
  └──────────────┘                 │        └──────────────┘
        │                          │                │
        └──────────────┬───────────┴────────────────┘
                       ▼           ╭S119
              ◇ All faces traversed? ◇ ──── No ──────────┘
                       │
                       │ Yes
                       ▼
                    ( End )
```

## FIG. 30

Start

S111 — Encode vertex of first face

S112 — Traverse to next face and write traversal symbol

S113 — Vertexes encoded? — Yes

No

S114 — Traversal symbol?

Coordinates — S115 — Encode vertex using coordinates

Angle — S116 — Encode vertex using angle

Parallelogram — S117 — Encode vertex using parallelogram

Polynomial — S118 — Encode vertex using polynomial

S119 — All faces traversed? — No

Yes

End

# FIG. 31

# FIG. 32

FIG. 33

# FIG. 34

| decode_mesh_geometry( ) { | Descriptor |
|---|---|
|    decode_one_vertex( ) // 1st vertex | |
|    decode_one_vertex( ) // 2nd vertex | |
|    decode_one_vertex( ) // 3rd vertex | |
|    do | |
|    { | |
|      **traversal_symbol** | ue(v) or ae(v) |
|      if (traversal_symbol == decode_vertex) | |
|        decode_one_vertex( ) // decode next vertex | |
|    } while(traversal_symbol != end_of_decoding) | |
| } | |

# FIG. 35

| decode_one_vertex( ) { | Descriptor |
|---|---|
|   **prediction_mode** | ue(v) or ae(v) |
|   if(prediction_mode == only_angles_mode) | |
|   { | |
|     **first_angle** | ue(v) or ae(v) |
|     **second_angle** | ue(v) or ae(v) |
|     **third_angle** | ue(v) or ae(v) |
|   } | |
|   else // other vertex coding methods | |
|   { | |
|     ... | |
|   } | |
| } | |

# FIG. 36

| decode_one_vertex( ) { | Descriptor |
|---|---|
| **prediction_mode** | ue(v) or ae(v) |
| if(prediction_mode == only_angles_mode) | |
| { | |
| **is_init_angles** | u(1) |
| if(is_init_angles) | |
| { | |
| **first_angle** | ue(v) or ae(v) |
| **second_angle** | ue(v) or ae(v) |
| **third_angle** | ue(v) or ae(v) |
| } | |
| else | |
| { | |
| /* methods to derive/predict three angles */ | |
| } | |
| } | |
| else // other vertex coding methods | |
| { | |
| ... | |
| } | |
| } | |

# FIG. 37

| Index | Angle |
|-------|-------|
| 0 | 30 |
| 1 | 10 |
| 2 | 16 |
| 3 | 21 |
| 4 | 25 |
| ... | ... |

# FIG. 38

| Index | Angle | | |
|-------|-------|--------|-------|
| | First | Second | Third |
| 0 | 10 | 30 | 60 |
| 1 | 8 | 20 | 10 |
| 2 | 9 | 60 | 43 |
| 3 | 15 | 15 | 19 |
| 4 | 0 | 27 | 31 |
| ... | ... | ... | ... |

# FIG. 39

3 angles with respect to
vertex of previous triangle
(10°, 30°, 60°)

Previous triangle

Present triangle

Syntax encoding of each angle:

    Delta

Derivation method of each angle:

    Present first angle = previous first angle + delta
    Present second angle = previous second angle + delta
    Present third angle = previous third angle + delta

# FIG. 40

Previous three-dimensional mesh    Present three-dimensional mesh

(a, b, c)

(d, e, f)

(j, k, l)

(g, h, i)

(x, y, z)

(First angle, second angle, third angle)

→ Time

Syntax encoding of each angle:

    Delta

Syntax encoding of each three-dimensional mesh:

    Average first angle, average second angle, average third angle

Derivation method of each angle:

    x = Average first angle + first delta      Average first angle = $\dfrac{(a + d + g + j)}{4}$

    y = Average second angle + second delta      Average second angle = $\dfrac{(b + e + h + k)}{4}$

    z = Average third angle + third delta      Average third angle = $\dfrac{(c + f + i + l)}{4}$

FIG. 41

# FIG. 42

```
        ┌─────────────┐
        │    Start     │
        └──────┬───────┘
               │          ⟋ S201
        ┌──────▼──────────────────────────┐
        │ Derive first vertex, second vertex, and │
        │ third vertex from three-dimensional mesh │
        └──────┬──────────────────────────┘
               │          ⟋ S202
        ┌──────▼──────────────────────────┐
        │ Decode first angle, second angle, and │
        │ third angle from bitstream       │
        └──────┬──────────────────────────┘
               │          ⟋ S203
        ┌──────▼──────────────────────────┐
        │ Derive fourth vertex using first angle, │
        │ second angle, and third angle    │
        └──────┬──────────────────────────┘
               │
        ┌──────▼───────┐
        │     End      │
        └──────────────┘
```

# FIG. 43

```
        ┌─────────┐
        │  Start  │
        └────┬────┘
             │        S211
             ▼
   ┌────────────────────────┐
   │ Decode vertex of first face │
   └──────────┬─────────────┘
              │        S212
              ▼
   ┌────────────────────────┐
   │ Decode traversal symbol │
   └──────────┬─────────────┘
              │        S213
              ▼
       ◇ Traversal symbol? ◇
```

Skip

Coordinates → Decode vertex using coordinates   S214

Angle → Decode vertex using angle   S215

End

```
        ┌─────────┐
        │   End   │
        └─────────┘
```

## FIG. 44

```
                    ┌─────────┐
                    │  Start  │
                    └────┬────┘
                         │          S211
             ┌───────────▼──────────────┐
             │ Decode vertex of first face │
             └───────────┬──────────────┘
                         │          S212
             ┌───────────▼──────────────┐
             │  Decode traversal symbol   │
             └───────────┬──────────────┘
                         │          S213
                    ◇─────▼─────◇
            Skip    Traversal symbol?  ──── Coordinates ──► Decode vertex using coordinates (S214)
                    ◇───────────◇
                         │ End           ──── Angle ──► Decode vertex using angle (S215)
                    ┌────▼────┐
                    │   End   │           ──── Parallelogram ──► Decode vertex using parallelogram (S216)
                    └─────────┘
                                          ──── Polynomial ──► Decode vertex using Polynomial (S217)
```

FIG. 45

| Angle [degrees] | sin (angle) | cos (angle) |
|:---:|:---:|:---:|
| 1 | 0.017452 | 0.999848 |
| 2 | 0.034899 | 0.999391 |
| 3 | 0.052336 | 0.998630 |
| 4 | 0.069756 | 0.997564 |
| 5 | 0.087156 | 0.996195 |
| ... | ... | ... |
| 180 | 0.000000 | -1.000000 |

FIG. 46

# FIG. 47

```
         ┌─────────┐
         │  Start  │
         └─────────┘
              │
              ▼
   ┌──────────────────────────────┐  S121
   │ Derive connection information │
   │ of first vertex, second       │
   │ vertex, and third vertex from │
   │ mesh                          │
   └──────────────────────────────┘
              │
              ▼
        ╱─────────────────╲  S122
       ╱ Does connection    ╲        No
      ╱  information satisfy  ╲──────────────┐
      ╲  condition?          ╱               │
       ╲                    ╱                │
        ╲──────────────────╱                 │
              │ Yes                          │
              ▼                              ▼
   ┌──────────────────────┐ S123   ┌──────────────────────┐ S124
   │ Derive first vertex,  │        │ Derive three vertexes │
   │ second vertex, and    │        │ including fifth vertex │
   │ third vertex as three │        └──────────────────────┘
   │ vertexes              │               │
   └──────────────────────┘               │
              │◄──────────────────────────┘
              ▼
   ┌──────────────────────────────┐ S125
   │ Derive multiple angles for    │
   │ determining fourth vertex     │
   │ from triangle formed by three │
   │ vertexes                      │
   └──────────────────────────────┘
              │
              ▼
   ┌──────────────────────────────┐ S126
   │ Encode multiple angles into   │
   │ bitstream                     │
   └──────────────────────────────┘
              │
              ▼
         ┌─────────┐
         │   End   │
         └─────────┘
```

# FIG. 48

Second angle

C1          D1'

First triangle

First angle

F1

D1

Second triangle

E1

Third angle

A1          B1

# FIG. 49

C2

First triangle

F2          D2

Second triangle

E2

Disconnected

A2          B2

# FIG. 50

Corresponding
triangle

E'
Corresponding point

D

First triangle

Common edge

E

Second triangle

B

F overlapping points
C

A

# FIG. 51

Corresponding
triangle

E'
Corresponding point

D

First triangle

Common
edge

E

Not exist
or not
encoded yet

New virtual
reference
triangle

Second triangle

B

C

A

# FIG. 52

Start

Encode vertexes of first face — S111

Traverse to next face and write traversal symbol — S112

S113
Have vertexes been encoded?

Yes

No

S114
What does traversal symbol indicate?

Coordinate → Encode vertex using coordinates — S115

Angle → Encode vertex using angles — S116

Parallelogram → Encode vertex using parallelogram — S117

Polynomial → Encode vertex using polynomial — S118

Exception → Encode vertex using exception — S131

S119
Have all faces been traversed?

No

Yes

End

82

EP 4 538 977 A1

# FIG. 53

100

Three-dimensional mesh → Traverser (161) → Determiner (167) → Angle deriver (163) → Entropy encoder (166) → Bitstream

Determiner (167) → Exception processor (168) → Angle deriver (163)

# FIG. 54

```
                    ┌─────────┐
                    │  Start  │
                    └────┬────┘
                         │
                         ▼                           S221
        ┌──────────────────────────────────────┐
        │ Derive connection information of      │
        │ first vertex, second vertex, and      │
        │ third vertex from bitstream           │
        └──────────────────┬───────────────────┘
                           │
                           ▼                    S222
                  ╱────────────────────╲            No
                 ╱  Does connection     ╲──────────────────┐
                 ╲  information          ╱                 │
                  ╲ satisfy condition?  ╱                  │
                   ╲──────────────────╱                    │
                         │ Yes                             │
              S223       │                       S224      │
        ┌───────────────▼──────────┐    ┌─────────────────▼──────┐
        │ Derive first vertex,     │    │ Derive three vertexes  │
        │ second vertex, and third │    │ including fifth vertex  │
        │ vertex as three vertexes │    │                        │
        └───────────────┬──────────┘    └────────────┬───────────┘
                        │                             │
                        │◄────────────────────────────┘
                        │
                        ▼                   S225
        ┌────────────────────────────┐
        │ Decode multiple angles     │
        │ from bitstream             │
        └───────────────┬────────────┘
                        │
                        ▼                   S226
        ┌────────────────────────────────────┐
        │ Determine fourth vertex from        │
        │ triangle formed by three vertexes   │
        │ using multiple angles               │
        └───────────────┬────────────────────┘
                        │
                        ▼
                  ┌─────────┐
                  │   End   │
                  └─────────┘
```

# FIG. 55

Start

Decode vertexes of first face — S211

Decode traversal symbol — S212

What does traversal symbol indicate? — S213

Skip

End

End

Coordinate → Decode vertex using coordinates — S214

Angle → Decode vertex using angles — S215

Parallelogram → Decode vertex using parallelogram — S216

Polynomial → Decode vertex using polynomial — S217

Exception → Decode vertex using exception — S231

FIG. 56

200

Bitstream → Entropy decoder (266) → Traverser (261) → Determiner (267) → Coordinate deriver (264) → Three-dimensional mesh

Determiner (267) → Exception processor (268) → Coordinate deriver (264)

# FIG. 57

```
        ( Start )
            |
            v                        S301
  +----------------------------------+
  | Set vertexes of reference triangle |
  | using predefined values           |
  +----------------------------------+
            |
            v
         ( End )
```

# FIG. 58

Start

S151

Derive coordinates of fourth
vertex from mesh

S152

Derive, from mesh, connection
information of reference triangle
having common edge shared with
second triangle

S153

Does each edge of reference
triangle have connectivity?          No

Yes

S154

Has each vertex of reference
triangle been encoded?               No

Yes

S155

Exception
processing

S156

Encode multiple angles for
determining coordinates
of fourth vertex

End

# FIG. 59

```
        ( Start )
            |
            v
┌───────────────────────────┐  S251
│ Decode multiple angles     │
│ from bitstream             │
└───────────────────────────┘
            |
            v
┌───────────────────────────┐  S252
│ Derive, from bitstream,    │
│ connection information of  │
│ reference triangle having  │
│ common edge shared with    │
│ second triangle            │
└───────────────────────────┘
            |
            v
      /─────────────\  S253
     /  Does each     \      No
    <  edge of reference >────────────┐
     \ triangle have    /             │
      \ connectivity?  /              │
       \─────────────/                │
            | Yes                      │
            v                          │
      /─────────────\  S254            │
     /  Has each      \      No        │
    <  vertex of        >──────────┐   │
     \ reference        /          │   │
      \ triangle been  /           │   │
       \  decoded?    /            │   │
        \───────────/             v    │
            | Yes          ┌──────────────┐ S255
            |              │ Exception    │
            |              │ processing   │
            |              └──────────────┘
            |                      │
            |<─────────────────────┘
            v
┌───────────────────────────┐  S256
│ Derive coordinates of      │
│ fourth vertex using        │
│ multiple angles            │
└───────────────────────────┘
            |
            v
        ( End )
```

# FIG. 60

Bitstream

Parameter

| | Data | | Data | | Data |

One encoded
image

# FIG. 61

Bitstream

Parameter

| | | | Data | | Data | | Data |

Header  One encoded
image

# FIG. 62

```
        ┌─────────────┐
        │    Start     │
        └─────────────┘
               │
               ▼
          ╱───────────╲                S161
         ╱  Does first  ╲
        ╱ triangle satisfy╲── No ──────────────┐
        ╲   condition?    ╱                      │
         ╲               ╱                        │
          ╲─────────────╱                         │
               │                                   │
              Yes                                  │
               │         S162                      │         S163
               ▼                                   ▼
    ┌─────────────────────┐         ┌─────────────────────────┐
    │ Select mode from among│         │ Select mode from among  │
    │ first set of modes    │         │ second set of modes     │
    │ including normal mode │         │ including exception mode│
    └─────────────────────┘         └─────────────────────────┘
               │                                   │
               ◄───────────────────────────────────┘
               │         S164
               ▼
    ┌─────────────────────┐
    │ Encode current vertex│
    │ to be encoded        │
    │ according to mode    │
    └─────────────────────┘
               │
               ▼
        ┌─────────────┐
        │     End      │
        └─────────────┘
```

# FIG. 63

```
          ┌─────────────┐
          │    Start    │
          └─────────────┘
                 │
                 ▼
              S261
         ◇─────────────◇
        ╱ Does first     ╲    No
       ◇  triangle satisfy ◇──────────┐
        ╲ condition?      ╱            │
         ◇─────────────◇               │
                 │ Yes                 │
                 ▼                     ▼
              S262                  S263
    ┌─────────────────────┐  ┌─────────────────────┐
    │ Select mode from    │  │ Select mode from    │
    │ among first set of  │  │ among second set of │
    │ modes including     │  │ modes including     │
    │ normal mode         │  │ exception mode      │
    └─────────────────────┘  └─────────────────────┘
                 │                     │
                 │◄────────────────────┘
                 ▼
              S264
    ┌─────────────────────┐
    │ Decode current      │
    │ vertex to be        │
    │ decoded according   │
    │ to mode             │
    └─────────────────────┘
                 │
                 ▼
          ┌─────────────┐
          │     End     │
          └─────────────┘
```

# FIG. 64

100

**Encoding device**

| Selector | 171 |

↓

| Encoding processor | 172 |

# FIG. 65

200

**Decoding device**

| Selector | 271 |

↓

| Decoding processor | 272 |

## INTERNATIONAL SEARCH REPORT

International application No.

**PCT/JP2023/021028**

| A. | CLASSIFICATION OF SUBJECT MATTER |
| --- | --- |

*G06T 9/00*(2006.01)i
FI: G06T9/00 100

According to International Patent Classification (IPC) or to both national classification and IPC

| B. | FIELDS SEARCHED |
| --- | --- |

Minimum documentation searched (classification system followed by classification symbols)

G06T9/00 - 9/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2010/089380 A1 (THOMSON LICENSING) 12 August 2010 (2010-08-12)<br>full text, all drawings | 1-30 |
| A | US 8830235 B1 (ALCATEL LUCENT) 09 September 2014 (2014-09-09)<br>full text, all drawings | 1-30 |
| A | JP 2000-224582 A (SAMSUNG ELECTRONICS COMPANY, LIMITED) 11 August 2000 (2000-08-11)<br>entire text, all drawings | 1-30 |
| A | ISENBURG, Martin, ALLIEZ, Pierre. Compressing Polygon Mesh Geometry with Parallelogram Prediction. IEEE Visualization 2002. IEEE. 2002, pages 141-146<br>entire text, all drawings | 1-30 |
| A | CHEN, Zhongbao, BAO, Fuliang, FANG, Zhigang, LI, Zhen. Compression of 3D Triangle Meshes with A Generalized Parallelogram Prediction Scheme Based on Vector Quantization. 2010 Sixth International Conference on Intelligent Information Hiding and Multimedia Signal Processing. 2010, pages 184-187<br>entire text, all drawings | 1-30 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/021028** |

**C. DOCUMENTS CONSIDERED TO BE RELEVANT**

| Category* | Citation of document, with indication, where appropriate, of the relevant passages | Relevant to claim No. |
| --- | --- | --- |
| P, A | WO 2023/074673 A1 (PANASONIC INTELLECTUAL PROPERTY CORPORATION OF AMERICA) 04 May 2023 (2023-05-04) entire text, all drawings | 1-30 |

Form PCT/ISA/210 (second sheet) (January 2015)

**INTERNATIONAL SEARCH REPORT**
Information on patent family members

| | International application No. |
|---|---|
| | **PCT/JP2023/021028** |

| Patent document cited in search report | | | Publication date (day/month/year) | Patent family member(s) | | | Publication date (day/month/year) |
|---|---|---|---|---|---|---|---|
| WO | 2010/089380 | A1 | 12 August 2010 | JP | 2012-517059 | A | |
| | | | | US | 2011/0285708 | A1 | |
| | | | | EP | 2216750 | A1 | |
| | | | | CN | 102308318 | A | |
| | | | | KR | 10-2011-0126110 | A | |
| US | 8830235 | B1 | 09 September 2014 | (Family: none) | | | |
| JP | 2000-224582 | A | 11 August 2000 | WO | 2000/013469 | A1 | |
| | | | | US | 6577310 | B1 | |
| | | | | full text, all drawings | | | |
| | | | | KR | 10-2000-0028583 | A | |
| | | | | CN | 1430864 | A | |
| | | | | US | 6668091 | B1 | |
| | | | | JP | 2006-187015 | A | |
| WO | 2023/074673 | A1 | 04 May 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006187015 A